(19) Europäisches Patentamt
European Patent Office
Office européen des brevets

(11) EP 4 699 692 A1

(12) **EUROPEAN PATENT APPLICATION**
published in accordance with Art. 153(4) EPC

(43) Date of publication:
25.02.2026 Bulletin 2026/09

(21) Application number: 24792680.1

(22) Date of filing: 16.04.2024

(51) International Patent Classification (IPC):
B01J 20/26 (2006.01)     B01D 53/04 (2006.01)
B01J 20/28 (2006.01)     B01J 20/30 (2006.01)

(52) Cooperative Patent Classification (CPC):
B01D 53/04; B01J 20/26; B01J 20/28; B01J 20/30;
Y02C 20/40

(86) International application number:
PCT/JP2024/015198

(87) International publication number:
WO 2024/219406 (24.10.2024 Gazette 2024/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.04.2023 JP 2023067196

(71) Applicant: Nitto Denko Corporation
Osaka 567-8680 (JP)

(72) Inventors:
• YAMAMOTO Mizuki
  Ibaraki-shi, Osaka 567-8680 (JP)
• ITO Katsunori
  Ibaraki-shi, Osaka 567-8680 (JP)
• UEDA Saki
  Ibaraki-shi, Osaka 567-8680 (JP)

(74) Representative: Hoffmann Eitle
Patent- und Rechtsanwälte PartmbB
Arabellastraße 30
81925 München (DE)

(54) **ACIDIC GAS ADSORBENT, STRUCTURE COMPRISING ACIDIC GAS ADSORBENT, ACIDIC GAS ADSORPTION DEVICE, AND ACIDIC GAS ADSORBENT PRODUCTION METHOD**

(57)     Provided is an acidic gas adsorbent suitable for adsorption and desorption of acidic gas under a relatively mild condition. The acidic gas adsorbent of the present invention includes a polymer P having an amino group. A density of nitrogen element in the acidic gas adsorbent is higher than 12.0 mmol/g. With respect to the acidic gas adsorbent, when an adsorption test A1 is performed, an adsorption amount a1 of carbon dioxide is 0.35 mmol/g or more. When a desorption test B1 is performed, a desorption amount b1 of carbon dioxide is 0.2 mmol/g or more.

FIG.1

EP 4 699 692 A1

**Description**

TECHNICAL FIELD

The present invention relates to an acidic gas adsorbent, a structure including the acidic gas adsorbent, an acidic gas adsorption device, and an acidic gas adsorbent production method.

BACKGROUND ART

In recent years, in order to reduce the amount of carbon dioxide in atmospheric air, carbon capture and storage (CCS) and carbon capture and utilization (CCU) have been considered. In CCS and CCU, in some cases, capture of carbon dioxide is performed by separating carbon dioxide from atmospheric air.

As a method for separating acidic gas such as carbon dioxide from atmospheric air, an adsorption method in which acidic gas is caused to be adsorbed by an adsorbent to be separated has been developed. The adsorbent utilized in the adsorption method can adsorb acidic gas by coming into contact with atmospheric air, for example.

Examples of the material of the adsorbent include an amine compound having a function of adsorbing acidic gas, etc. As an example, Patent Literature 1 discloses fibrillated cellulose in which an amino group is introduced, as an adsorbent. Patent Literature 2 discloses an adsorbent in which amino groups are introduced inside the pores of a mesoporous material.

CITATION LIST

Patent Literature

| | |
|---|---|
| Patent Literature 1: | WO 2017/009241 |
| Patent Literature 2: | US Patent No. 7767004 |

SUMMARY OF INVENTION

Technical Problem

An acidic gas adsorbent suitable for adsorption and desorption of acidic gas under a relatively mild condition is required.

Solution to Problem

The present invention provides an acidic gas adsorbent including a polymer having an amino group, wherein

a density of nitrogen element in the acidic gas adsorbent is higher than 12.0 mmol/g,
when the following adsorption test A1 is performed, an adsorption amount a1 of carbon dioxide is 0.35 mmol/g or more, and
when the following desorption test B1 is performed, a desorption amount b1 of carbon dioxide is 0.2 mmol/g or more,
adsorption test A1: mixed gas composed of carbon dioxide, nitrogen, and water vapor is continuously fed into a container containing the acidic gas adsorbent for 15 hours, wherein a concentration of the carbon dioxide in the mixed gas is 400 vol ppm, and the mixed gas has a temperature of 23°C and a humidity of 50%RH, and
desorption test B1: the acidic gas adsorbent after the adsorption test A1 is performed is heated at 65°C for 1.5 hours while the mixed gas is continuously fed into the container.

Further, the present invention provides an acidic gas adsorbent including a polymer having an amino group, wherein

a density of nitrogen element in the acidic gas adsorbent is higher than 12.0 mmol/g,
the acidic gas adsorbent has a specific surface area of 0.5 $m^2$/g or more, and
the polymer has a glass transition temperature of 40°C or less.

Further, the present invention provides a structure including:

the above acidic gas adsorbent; and
an air flow path.

Further, the present invention provides an acidic gas adsorption device including an adsorption part having a gas inlet and a gas outlet, wherein
the adsorption part contains the above acidic gas adsorbent.

Further, the present invention provides a production method for the above acidic gas adsorbent, including causing a compound group including an amine monomer having a primary amino group to react to synthesize the polymer.

Advantageous Effects of Invention

According to the present invention, an acidic gas adsorbent suitable for adsorption and desorption of acidic gas under a relatively mild condition can be provided.

BRIEF DESCRIPTION OF THE DRAWINGS

FIG. 1 is a diagram for describing a method for measuring an adsorption amount of carbon dioxide by an acidic gas adsorbent.
FIG. 2A is a perspective view schematically showing an example of a structure including acidic gas adsorbents.
FIG. 2B is a perspective view schematically showing a modification of the structure including the acidic gas adsorbents.
FIG. 2C is a perspective view schematically showing another modification of the structure including the acidic gas adsorbents.
FIG. 3A is a perspective view schematically showing an example of an acidic gas recovery device.
FIG. 3B is a cross-sectional view showing a schematic configuration of a modification of the acidic gas recovery device.
FIG. 4 shows near-infrared absorption spectra showing the results of near-infrared spectroscopy performed with respect to polymers produced in Example 1 and Example 2.

DESCRIPTION OF EMBODIMENTS

An acidic gas adsorbent according to a first aspect of the present invention is an acidic gas adsorbent including a polymer having an amino group, wherein

a density of nitrogen element in the acidic gas adsorbent is higher than 12.0 mmol/g,
when the following adsorption test A1 is performed, an adsorption amount a1 of carbon dioxide is 0.35 mmol/g or more, and
when the following desorption test B1 is performed, a desorption amount b1 of carbon dioxide is 0.2 mmol/g or more,
adsorption test A1: mixed gas composed of carbon dioxide, nitrogen, and water vapor is continuously fed into a container containing the acidic gas adsorbent for 15 hours, wherein a concentration of the carbon dioxide in the mixed gas is 400 vol ppm, and the mixed gas has a temperature of 23°C and a humidity of 50%RH, and
desorption test B1: the acidic gas adsorbent after the adsorption test A1 is performed is heated at 65°C for 1.5 hours while the mixed gas is continuously fed into the container.

In a second aspect of the present invention, for example, in the acidic gas adsorbent according to the first aspect, the adsorption amount a1 is 2.4 mmol/g or more.
In a third aspect of the present invention, for example, in the acidic gas adsorbent according to the first or second aspect, the desorption amount b1 is 2.0 mmol/g or more.
In a fourth aspect of the present invention, for example, in the acidic gas adsorbent according to any one of the first to third aspects, when the following adsorption test A2 is performed, an adsorption amount a2 of carbon dioxide is 0.8 mmol/g or more, adsorption test A2: the mixed gas is continuously fed into the container for 1 hour.
In a fifth aspect of the present invention, for example, in the acidic gas adsorbent according to any one of the first to fourth aspects, when the following adsorption test A3 is performed, an adsorption amount a3 of carbon dioxide is 1.9 mmol/g or more,

adsorption test A3: the mixed gas is continuously fed into the container for 4 hours.

An acidic gas adsorbent according to a sixth aspect of the present invention is an acidic gas adsorbent including a polymer having an amino group, wherein

a density of nitrogen element in the acidic gas adsorbent is higher than 12.0 mmol/g,
the acidic gas adsorbent has a specific surface area of 0.5 m²/g or more, and
the polymer has a glass transition temperature of 40°C or less.

In a seventh aspect of the present invention, for example, in the acidic gas adsorbent according to any one of the first to sixth aspects, the polymer has a glass transition temperature of less than -1°C.

In an eighth aspect of the present invention, for example, in the acidic gas adsorbent according to any one of the first to seventh aspects, the density of nitrogen element in the acidic gas adsorbent is 13.0 mmol/g or more.

In a ninth aspect of the present invention, for example, in the acidic gas adsorbent according to any one of the first to eighth aspects, the polymer is an amine polymer including a constitutional unit derived from an epoxy monomer.

In a tenth aspect of the present invention, for example, in the acidic gas adsorbent according to the ninth aspect, the amine polymer includes a reaction product of a compound group including an amine monomer and an epoxy monomer.

In an eleventh aspect of the present invention, for example, in the acidic gas adsorbent according to the tenth aspect, the amine monomer includes polyethyleneimine.

In a twelfth aspect of the present invention, for example, the acidic gas adsorbent according to any one of the first to eleventh aspects has a porous structure.

A structure according to a thirteenth aspect of the present invention includes:

the acidic gas adsorbent according to any one of the first to twelfth aspects; and
an air flow path.

An acidic gas adsorption device according to a fourteenth aspect of the present invention includes

an adsorption part having a gas inlet and a gas outlet, wherein
the adsorption part contains the acidic gas adsorbent according to any one of the first to twelfth aspects.

A production method for an acidic gas adsorbent according to a fifteenth aspect of the present invention is a production method for the acidic gas adsorbent according to any one of the first to twelfth aspects, including causing a compound group including an amine monomer having a primary amino group to react to synthesize the polymer.

In a sixteenth aspect of the present invention, for example, in the production method according to the fifteenth aspect, the compound group further includes an epoxy monomer having an epoxy group, and a ratio E/A of an equivalent E of the epoxy group in the compound group relative to an equivalent A of active hydrogen of the primary amino group in the compound group is less than 0.50.

Hereinafter, details of the present invention will be described, but the following description is not intended to limit the present invention to specific embodiments.

<Embodiment of acidic gas adsorbent>

An acidic gas adsorbent of the present embodiment includes a polymer P having an amino group. A density d of nitrogen element in the acidic gas adsorbent is higher than 12.0 mmol/g.

The density d of nitrogen element in the acidic gas adsorbent is preferably 12.2 mmol/g or more, and may be 12.5 mmol/g or more, 13.0 mmol/g or more, 13.5 mmol/g or more, 14.0 mmol/g or more, 14.5 mmol/g or more, 15.0 mmol/g or more, 15.5 mmol/g or more, 16.0 mmol/g or more, 16.5 mmol/g or more, 17.0 mmol/g or more, or even 17.5 mmol/g or more. The higher the density d of nitrogen element is, the larger and the higher the adsorption amount of acidic gas by the acidic gas adsorbent and the speed at which acidic gas is adsorbed by the acidic gas adsorbent tend to be. The upper limit value of the density d of nitrogen element is not limited in particular, is, for example, 30 mmol/g, and may be 20 mmol/g. In the present description, the density d of nitrogen element in the acidic gas adsorbent means the amount of substance of nitrogen element included in 1 g of the acidic gas adsorbent. When all nitrogen element included in the acidic gas adsorbent is derived from the amino group, the density d of nitrogen element can be regarded as the density of the amino group in the acidic gas adsorbent.

The density d of nitrogen element can be measured according to the following method. First, a weight ratio w (wt%) of nitrogen element included in the acidic gas adsorbent is measured by using a commercially-available CHN elemental analyzer. On the basis of the obtained result, the density d of nitrogen element can be calculated from the following formula.

Density d (mmol/g) = (weight ratio w (wt%) $\times$ 1000)/(atomic weight of nitrogen $\times$ 100)

With respect to the acidic gas adsorbent of the present embodiment, when the following adsorption test A1 is performed, an adsorption amount a1 of carbon dioxide is 0.35 mmol/g or more. Furthermore, when the following desorption test B1 is performed, a desorption amount b1 of carbon dioxide is 0.2 mmol/g or more.

Adsorption test A1: Mixed gas G composed of carbon dioxide, nitrogen, and water vapor is continuously fed into a container containing the acidic gas adsorbent for 15 hours. Here, the concentration of the carbon dioxide in the mixed gas G is 400 vol ppm, and the mixed gas G has a temperature of 23°C and a humidity of 50%RH.

Desorption test B1: The acidic gas adsorbent after the adsorption test A1 is performed is heated at 65°C for 1.5 hours while the mixed gas G is continuously fed into the above container.

(Adsorption test and desorption test)

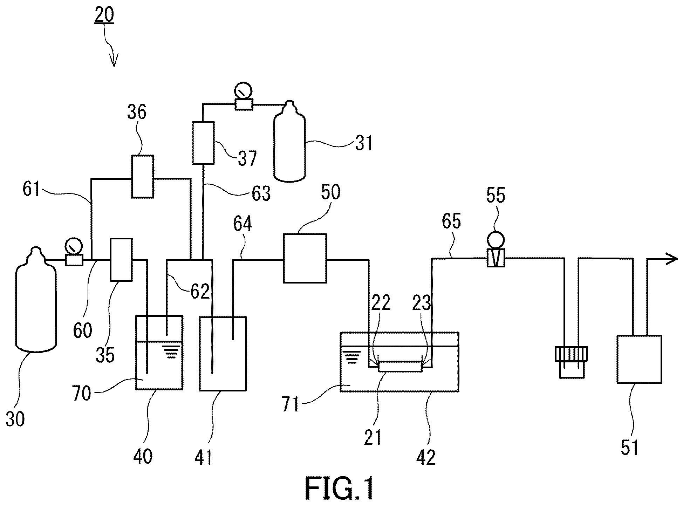

In the following, the details of the adsorption test A1 and the desorption test B1 will be described. The adsorption test A1 and the desorption test B1 can be performed by using a measurement device 20 shown in FIG. 1. The measurement device 20 includes a first tank 30 and a second tank 31. As an example, the first tank 30 stores dry-state nitrogen, and the second tank 31 stores mixed gas of dry-state nitrogen and dry-state carbon dioxide. The concentration of carbon dioxide in the mixed gas in the second tank 31 is 5 vol%, for example.

The measurement device 20 further includes a first container 40 containing water 70, and a first path 60 for sending nitrogen from the first tank 30 to the first container 40. The first path 60 has one end connected to a gas outlet of the first tank 30, and the other end disposed in the water 70 in the first container 40. Nitrogen sent from the first tank 30 to the first container 40 is humidified by coming into contact with the water 70. On the first path 60, a massflow controller 35 for adjusting the flow rate of nitrogen that is sent from the first tank 30 to the first container 40 is disposed.

The measurement device 20 further includes a second container 41, a second path 62, and a bypass path 61. The second path 62 connects the first container 40 and the second container 41 to each other. Nitrogen sent to the first container 40 and humidified is sent through the second path 62 to the second container 41. The bypass path 61 is branched from the first path 60 at a position between the first tank 30 and the massflow controller 35 and is connected to the second path 62. A part of the nitrogen sent from the first tank 30 flows into the bypass path 61 and is sent through the second path 62 to the second container 41. On the bypass path 61, a massflow controller 36 for adjusting the flow rate of nitrogen that is sent from the first tank 30 to the bypass path 61 is disposed.

The measurement device 20 further includes a third path 63 for sending the mixed gas from the second tank 31 to the second path 62. The third path 63 has one end connected to a gas outlet of the second tank 31 and the other end connected to the second path 62. On the third path 63, a massflow controller 37 for adjusting the flow rate of the mixed gas that is sent from the second tank 31 to the second path 62 is disposed. The mixed gas sent to the second path 62 is sent through the second path 62 to the second container 41.

The measurement device 20 further includes a third container 42 and a fourth path 64. The third container 42 contains water 71 and an adsorption part 21 disposed in the water 71. In the third container 42, the temperature of the water 71 is maintained at 23°C. The adsorption part 21 has a gas inlet 22 and a gas outlet 23. The adsorption part 21 serves as a container containing the acidic gas adsorbent. The adsorption part 21 is configured such that the water 71 does not permeate therein. Typically, the adsorption part 21 is a tube composed of a hydrophobic resin, e.g., a fluorine resin such as tetrafluoroethylene-perfluoroalkoxyethylene copolymer (PFA). As an example, the tube as the adsorption part 21 has an inner diameter of 4 mm and an outer diameter of 6 mm. The adsorption part 21 is configured to be attachable to/detachable from the measurement device 20.

The measurement device 20 can also be used as an acidic gas adsorption device including the adsorption part 21. The present invention provides, in another aspect thereof, an acidic gas adsorption device 20 including the adsorption part 21 having the gas inlet 22 and the gas outlet 23, wherein the adsorption part 21 contains the acidic gas adsorbent.

The fourth path 64 connects the second container 41 and the third container 42 to each other. Specifically, the fourth path 64 is connected to the gas inlet 22 of the adsorption part 21 in the third container 42. In the fourth path 64, a first concentration meter 50 for measuring the concentration of carbon dioxide in the gas that is supplied to the adsorption part 21 is disposed. As the first concentration meter 50, a $CO_2/H_2O$ gas analyzer, LI-850-3, manufactured by LI-COR, Inc., can be used.

The measurement device 20 further includes a fifth path 65 connected to the gas outlet 23 of the adsorption part 21 and for discharging gas from the adsorption part 21 to the outside of the measurement device 20. On the fifth path 65, a back pressure valve 55 and a second concentration meter 51 are disposed. The back pressure valve 55 allows the pressure in the adsorption part 21 to be adjusted to a constant value. The second concentration meter 51 can measure the concentration of carbon dioxide in the gas that is discharged from the adsorption part 21. As the second concentration meter 51, a $CO_2/H_2O$ gas analyzer, LI-850-3, manufactured by LI-COR, Inc., can be used.

Each path of the measurement device 20 is preferably composed of a metal-made or resin-made pipe.

[Pretreatment]

First, an acidic gas adsorbent is prepared, and a drying process is performed thereon. The acidic gas adsorbent that has not been subjected to heat resistance and moisture heat resistance tests described later is used. The drying process is preferably performed by processing the acidic gas adsorbent for two hours or more under a condition of 60°C in a vacuum atmosphere. Next, in a dry room having a dew point of about -60°C, the adsorption part 21 is filled with the acidic gas adsorbent having been subjected to the drying process. The weight of the acidic gas adsorbent with which the adsorption part 21 is filled is 50 mg, for example. Next, the fourth path 64 and the fifth path 65 are connected to both ends of the adsorption part 21, and the adsorption part 21 is immersed in the water 71 in the third container 42.

Next, nitrogen from the first tank 30 and the mixed gas from the second tank 31 are supplied to the second container 41 through the first path 60, the second path 62, the bypass path 61, and the third path 63 of the measurement device 20. In the second container 41, these gases are mixed, and the mixed gas G composed of carbon dioxide, nitrogen, and water vapor is obtained. In the second container 41, the concentration of carbon dioxide in the mixed gas G is adjusted to 400 vol ppm. The mixed gas G has a temperature of 23°C and a humidity of 50%RH. The mixed gas G is supplied to the adsorption part 21 through the fourth path 64, at a sufficient flow rate with respect to the weight of the acidic gas adsorbent, e.g., at a flow rate of 300 mL/min with respect to 50 mg of the acidic gas adsorbent. In the adsorption part 21, the pressure of the mixed gas G is adjusted by the back pressure valve 55, for example, to 107 kPa.

Next, in a state where the mixed gas G is supplied to the adsorption part 21, the adsorption part 21 is taken out of the third container 42, and the adsorption part 21 is immersed in a hot water bath (not shown) at 80°C for two hours or more. Immersion of the adsorption part 21 in the hot water bath is performed until the concentration of carbon dioxide measured by the first concentration meter 50 and the concentration of carbon dioxide measured by the second concentration meter 51 have substantially the same value. Accordingly, with respect to the acidic gas adsorbent in the adsorption part 21, the pretreatment is completed.

[Adsorption test]

Next, in a state where the mixed gas G is supplied to the adsorption part 21, the adsorption part 21 is taken out of the hot water bath and is immersed in the water 71 in the third container 42. Accordingly, an adsorption test (adsorption test A1) for carbon dioxide is started with respect to the acidic gas adsorbent in the adsorption part 21. The adsorption test is performed until 15 hours elapses from the start. Specifically, the mixed gas G is continuously fed to the adsorption part 21 for 15 hours. When the adsorption test is performed for 15 hours, adsorption of carbon dioxide by the acidic gas adsorbent can, normally, be regarded as having reached equilibrium.

In the adsorption test A1, an amount of substance M1 of carbon dioxide adsorbed by the acidic gas adsorbent until 15 hours from the start is measured. The amount of substance of carbon dioxide adsorbed by the acidic gas adsorbent can be calculated from a result of measuring, over time, the difference between the concentration of carbon dioxide measured by the first concentration meter 50 and the concentration of carbon dioxide measured by the second concentration meter 51. On the basis of the amount of substance M1, the amount of substance of carbon dioxide adsorbed by 1 g of the acidic gas adsorbent in 15 hours is calculated, and the obtained calculated value is identified as the adsorption amount a1.

[Desorption test]

Next, in a state where the mixed gas G is continuously fed to the adsorption part 21, the adsorption part 21 is taken out from the third container 42 and immersed in a hot water bath (not shown) at 65°C. Accordingly, a desorption test (desorption test B1) for carbon dioxide is started with respect to the acidic gas adsorbent in the adsorption part 21. The desorption test is performed until 1.5 hours elapses from the start.

In the desorption test B1, an amount of substance M2 of carbon dioxide desorbed from the acidic gas adsorbent until 1.5 hours from the start is measured. The amount of substance of carbon dioxide desorbed from the acidic gas adsorbent can be calculated from a result of measuring, over time, the difference between the concentration of carbon dioxide measured by the first concentration meter 50 and the concentration of carbon dioxide measured by the second concentration meter 51. On the basis of the amount of substance M2, the amount of substance of carbon dioxide desorbed from 1 g of the acidic gas adsorbent in 1.5 hours is calculated, and the obtained calculated value is identified as the desorption amount b1.

[Adsorption amount and desorption amount]

With respect to the acidic gas adsorbent of the present embodiment, the adsorption amount a1 of carbon dioxide when the adsorption test A1 is performed is preferably 0.4 mmol/g or more, and may be 0.5 mmol/g or more, 0.8 mmol/g or more, 1.0 mmol/g or more, 1.3 mmol/g or more, 1.5 mmol/g or more, 1.8 mmol/g or more, 2.0 mmol/g or more, 2.3 mmol/g or more, 2.4 mmol/g or more, 2.5 mmol/g or more, 2.8 mmol/g or more, 3.0 mmol/g or more, 3.3 mmol/g or more, or even 3.5 mmol/g or more. The upper limit value of the adsorption amount a1 of carbon dioxide is not limited in particular, and is 10 mmol/g, for example.

With respect to the acidic gas adsorbent of the present embodiment, the desorption amount b1 of carbon dioxide when the desorption test B1 is performed is preferably 0.25 mmol/g or more, and may be 0.3 mmol/g or more, 0.5 mmol/g or more, 0.8 mmol/g or more, 1.0 mmol/g or more, 1.3 mmol/g or more, 1.5 mmol/g or more, 1.8 mmol/g or more, 2.0 mmol/g or more, 2.3 mmol/g or more, 2.5 mmol/g or more, 2.8 mmol/g or more, 3.0 mmol/g or more, 3.3 mmol/g or more, or even 3.5 mmol/g or more. The upper limit value of the desorption amount b1 of carbon dioxide is not limited in particular, and is 10 mmol/g, for example.

The rate (65°C desorption rate) of the desorption amount b1 (mmol/g) relative to the adsorption amount a1 (mmol/g) is, for example, 40% or more, and may be 45% or more, 50% or more, 60% or more, 70% or more, 80% or more, 90% or more, 95% or more, 96% or more, or even 97% or more, or may be 100%.

The present invention provides, in another aspect thereof, an acidic gas adsorbent including a polymer P having an amino group, wherein

a density of nitrogen element in the acidic gas adsorbent is higher than 12.0 mmol/g,
when the above adsorption test A1 is performed, an adsorption amount a1 of carbon dioxide is 0.35 mmol/g or more, and
the rate (65°C desorption rate) of a desorption amount b1 (mmol/g) of carbon dioxide when the above desorption test B1 is performed, relative to the adsorption amount a1 (mmol/g), is 40% or more.

In the acidic gas adsorbent, the 65°C desorption rate may satisfy the range exemplified above, and in particular may be 50% or more.

With respect to the acidic gas adsorbent of the present embodiment, when the following desorption test B2 is performed, a desorption amount b2 of carbon dioxide is preferably 0.2 mmol/g or more.

Desorption test B2: The acidic gas adsorbent after the above adsorption test A1 is performed is heated at 50°C for 1.5 hours while the mixed gas G is continuously fed into a container (the above-described adsorption part 21) containing the acidic gas adsorbent.

The desorption test B2 can be performed by the same method as the above-described desorption test B1, except that the adsorption part 21 is immersed in a hot water bath at 50°C. The desorption amount b2 of carbon dioxide when the desorption test B2 is performed is preferably 0.25 mmol/g or more, and may be 0.3 mmol/g or more, 0.5 mmol/g or more, 0.8 mmol/g or more, 1.0 mmol/g or more, 1.3 mmol/g or more, 1.5 mmol/g or more, 1.8 mmol/g or more, 2.0 mmol/g or more, or even 2.3 mmol/g or more. The upper limit value of the desorption amount b2 of carbon dioxide is not limited in particular, and is 10 mmol/g, for example.

The rate (50°C desorption rate) of the desorption amount b2 (mmol/g) relative to the adsorption amount a1 (mmol/g) is, for example, 40% or more, and may be 45% or more, 50% or more, 60% or more, 70% or more, 80% or more, or even 90% or more. The upper limit value of the 50°C desorption rate is not limited in particular, and is 99%, for example.

With respect to the acidic gas adsorbent of the present embodiment, when the following adsorption test A2 is performed, an adsorption amount a2 of carbon dioxide is preferably 0.05 mmol/g or more. The adsorption amount a2 can be used as an indicator of the speed at which acidic gas is adsorbed. That is, it can be said that the larger the adsorption amount a2 is, the higher the speed at which the acidic gas adsorbent adsorbs acidic gas is.

Adsorption test A2: The mixed gas G is continuously fed into a container (the above-described adsorption part 21) containing the acidic gas adsorbent for 1 hour.

The adsorption test A2 can be performed by the same method as the above-described adsorption test A1, except that the test time is changed from 15 hours to 1 hour. The adsorption amount a2 of carbon dioxide when the adsorption test A2 is performed is preferably 0.1 mmol/g or more, and may be 0.2 mmol/g or more, 0.3 mmol/g or more, 0.4 mmol/g or more, 0.5 mmol/g or more, 0.6 mmol/g or more, 0.7 mmol/g or more, 0.8 mmol/g or more, 0.9 mmol/g or more, 1.0 mmol/g or more, 1.1 mmol/g or more, or even 1.2 mmol/g or more. The upper limit value of the adsorption amount a2 of carbon dioxide is not limited in particular, and is 5 mmol/g, for example.

With respect to the acidic gas adsorbent of the present embodiment, when the following adsorption test A3 is performed, an adsorption amount a3 of carbon dioxide is preferably 0.1 mmol/g or more. The adsorption amount a3 can also be used as an indicator of the speed at which acidic gas is adsorbed. That is, it can be said that the larger the adsorption amount a3 is, the higher the speed at which the acidic gas adsorbent adsorbs acidic gas is.

Adsorption test A3: The mixed gas G is continuously fed into a container (the above-described adsorption part 21) containing the acidic gas adsorbent for 4 hours.

The adsorption test A3 can be performed by the same method as the above-described adsorption test A1, except that the test time is changed from 15 hours to 4 hours. The adsorption amount a3 of carbon dioxide when the adsorption test A3 is performed is preferably 0.3 mmol/g or more, and may be 0.5 mmol/g or more, 0.8 mmol/g or more, 1.0 mmol/g or more, 1.3 mmol/g or more, 1.5 mmol/g or more, 1.8 mmol/g or more, 1.9 mmol/g or more, 2.0 mmol/g or more, or even 2.3 mmol/g or more. The upper limit value of the adsorption amount a3 of carbon dioxide is not limited in particular, and is 5 mmol/g, for example.

(Heat resistance test)

The acidic gas adsorbent of the present embodiment preferably has high heat resistance. The heat resistance of the acidic gas adsorbent can be evaluated by performing a heat resistance test with respect to the acidic gas adsorbent. The heat resistance test can be performed by performing heat treatment in an environment of 85°C and 10%RH for 100 hours with respect to the acidic gas adsorbent. As an example, when the heat treatment is performed in an environment of 85°C and 10%RH for 100 hours with respect to the acidic gas adsorbent, a maintenance rate R1 of the amount (mmol/g) of carbon dioxide that can be adsorbed is, for example, 30% or more, and may be 40% or more, 50% or more, 60% or more, 70% or more, 80% or more, 85% or more, 90% or more, 92% or more, 94% or more, 95% or more, or even 96% or more. For the acidic gas adsorbent, it can be said that the higher the maintenance rate R1 is, the higher the heat resistance is. It can be said that the acidic gas adsorbent having higher heat resistance has higher durability in long-term use. The upper limit value of the maintenance rate R1 is not limited in particular, and is 99%, for example.

The maintenance rate R1 can be identified in detail by the following method. First, the acidic gas adsorbent is placed in a glass container (e.g., Laboran screw tube bottle, manufactured by AS ONE Corporation) in a dry room having a dew point of about - 60°C. Next, the glass container is set in a constant temperature and humidity machine (e.g., PSL-2J, manufactured by ESPEC CORP.), and heat treatment is performed at 85°C and 10%RH for 100 hours in air. Next, the acidic gas adsorbent after heat treatment is set in a vacuum dryer (e.g., VOS-310C, manufactured by EYELA) in a dry room and treated in a vacuum atmosphere under a condition of 60°C for 2 hours or more. With respect to the acidic gas adsorbent after treatment, an adsorption amount a4 of carbon dioxide when the above adsorption test A1 is performed is measured. On the basis of the obtained adsorption amount a4 and the adsorption amount a1 of carbon dioxide when the adsorption test A1 is performed with respect to the acidic gas adsorbent before the heat resistance test, the maintenance rate R1 can be calculated by the following formula.

Maintenance rate R1 (%) = adsorption amount a4 (mmol/g) ÷ adsorption amount a1 (mmol/g) $\times$ 100

The adsorption amount a4 of carbon dioxide is, for example, 0.35 mmol/g or more, and may be 0.4 mmol/g or more, 0.5 mmol/g or more, 0.8 mmol/g or more, 1.0 mmol/g or more, 1.3 mmol/g or more, 1.5 mmol/g or more, 1.8 mmol/g or more, 2.0 mmol/g or more, 2.3 mmol/g or more, 2.4 mmol/g or more, 2.5 mmol/g or more, 2.8 mmol/g or more, 3.0 mmol/g or more, 3.3 mmol/g or more, or even 3.5 mmol/g or more. The upper limit value of the adsorption amount a4 of carbon dioxide is not limited in particular, and is 10 mmol/g, for example.

(Moisture heat resistance test)

The acidic gas adsorbent of the present embodiment preferably has high moisture heat resistance. The moisture heat resistance of the acidic gas adsorbent can be evaluated by performing a moisture heat resistance test with respect to the acidic gas adsorbent. The moisture heat resistance test can be performed by performing heat treatment in an environment of 85°C and 85%RH for 100 hours with respect to the acidic gas adsorbent. As an example, when the heat treatment is performed in an environment of 85°C and 85%RH for 100 hours with respect to the acidic gas adsorbent, a maintenance rate R2 of the amount (mmol/g) of carbon dioxide that can be adsorbed is, for example, 30% or more, and may be 40% or more, 50% or more, 60% or more, 70% or more, 80% or more, 85% or more, 90% or more, 95% or more, or even 96% or more. For the acidic gas adsorbent, it can be said that the higher the maintenance rate R2 is, the higher the moisture heat resistance is. It can be said that the acidic gas adsorbent having higher moisture heat resistance has higher durability in long-term use. The upper limit value of the maintenance rate R2 is not limited in particular, and is 99%, for example.

The maintenance rate R2 can be identified in detail by the following method. First, the acidic gas adsorbent is placed in a glass container (e.g., Laboran screw tube bottle, manufactured by AS ONE Corporation) in a dry room having a dew point of about - 60°C. Next, the glass container is set in a constant temperature and humidity machine (e.g., PSL-2J, manufactured by ESPEC CORP.), and heat treatment is performed at 85°C and 85%RH for 100 hours in air. Next, the acidic gas adsorbent after heat treatment is set in a vacuum dryer (e.g., VOS-310C, manufactured by EYELA) in a dry room and treated in a vacuum atmosphere under a condition of 60°C for 2 hours or more. With respect to the acidic gas adsorbent after treatment, an adsorption amount a5 of carbon dioxide when the above adsorption test A1 is performed is measured. On the basis of the obtained adsorption amount a5 and the adsorption amount a1 of carbon dioxide when the adsorption test A1 is performed with respect to the acidic gas adsorbent before the moisture heat resistance test, the maintenance rate R2 can be calculated by the following formula.

Maintenance rate R2 (%) = adsorption amount a5 (mmol/g) ÷ adsorption amount a1 (mmol/g) × 100

The adsorption amount a5 of carbon dioxide is, for example, 0.35 mmol/g or more, and may be 0.4 mmol/g or more, 0.5 mmol/g or more, 0.8 mmol/g or more, 1.0 mmol/g or more, 1.3 mmol/g or more, 1.5 mmol/g or more, 1.8 mmol/g or more, 2.0 mmol/g or more, 2.3 mmol/g or more, 2.4 mmol/g or more, 2.5 mmol/g or more, 2.8 mmol/g or more, 3.0 mmol/g or more, 3.3 mmol/g or more, or even 3.5 mmol/g or more. The upper limit value of the adsorption amount a5 of carbon dioxide is not limited in particular, and is 10 mmol/g, for example.

(Polymer)

In the acidic gas adsorbent, the polymer P has a function of adsorbing acidic gas due to the amino group. The polymer P preferably includes, as the amino group, at least one selected from the group consisting of a primary amino group, a secondary amino group, and a tertiary amino group. From the viewpoint of the acidic gas adsorption ability, the polymer P preferably includes at least one selected from the group consisting of a primary amino group and a secondary amino group, and preferably includes both a primary amino group and a secondary amino group. The larger the amount of substance of the primary amino group and the secondary amino group (especially the primary amino group) in the polymer P is, the more the density d of nitrogen element in the acidic gas adsorbent tends to increase and the more the above adsorption amounts a1 and a3 (especially the adsorption amount a1) tend to increase. When the amount of substance of the primary amino group and the secondary amino group (especially the secondary amino group) in the polymer P is large, the acidic gas adsorbent tends to be able to easily desorb the adsorbed acidic gas. In the case of the polymer P having a primary amino group or a secondary amino group, a regeneration process of the acidic gas adsorbent can be performed under a relatively mild condition. The polymer P may include a tertiary amino group, but does not have to include any tertiary amino group.

In the present embodiment, in a near-infrared absorption spectrum (spectral data) obtained by performing near-infrared spectroscopy (NIR) with respect to the polymer P, a ratio $I_A/I_B$ of a peak intensity $I_A$ of an absorption peak existing around a wavenumber of 4930 cm$^{-1}$ relative to a peak intensity $I_B$ of an absorption peak existing around a wavenumber of 6500 cm$^{-1}$ is preferably 0.80 or more. Normally, in the case where the polymer P includes a primary amino group and a secondary amino group, an absorption peak derived from the primary amino group and the secondary amino group is observed around a wavenumber of 6500 cm$^{-1}$, and an absorption peak derived from the primary amino group is observed around a wavenumber of 4930 cm$^{-1}$. Therefore, the above ratio $I_A/I_B$ can be used as an indicator of the ratio of the amount of substance of the primary amino group to the amount of substance of the secondary amino group in the polymer P. NIR can be performed using a transparent test piece obtained by press-molding the polymer P. In this test piece, light scattering which can influence the results of NIR tends to be less likely to occur.

The ratio $I_A/I_B$ may be more preferably 0.90 or more, 0.95 or more, 1.00 or more, 1.05 or more, 1.10 or more, 1.15 or more, or even 1.20 or more. The higher the ratio $I_A/I_B$ is, the more the above adsorption amounts a1 to a3 (especially the adsorption amount a1) tend to increase. The upper limit of the ratio $I_A/I_B$ is not limited in particular, and is 1.50 or less, for example.

The weight ratio of nitrogen element in the polymer P is, for example, 5 wt% or more and preferably 10 wt% or more. The higher this weight ratio is, the more the acidic gas adsorption ability of the acidic gas adsorbent tends to be improved. The upper limit value of the weight ratio of nitrogen element in the polymer P is not limited in particular, and is 30 wt%, for example. When all nitrogen element included in the polymer P is derived from the amino group, the above weight ratio of nitrogen element can be regarded as the weight ratio of the amino group in the polymer P.

The density of nitrogen element in the polymer P is, for example, higher than 12.0 mmol/g and preferably 12.2 mmol/g or more, and may be 12.5 mmol/g or more, 13.0 mmol/g or more, 13.5 mmol/g or more, 14.0 mmol/g or more, 14.5 mmol/g or more, 15.0 mmol/g or more, 15.5 mmol/g or more, 16.0 mmol/g or more, 16.5 mmol/g or more, 17.0 mmol/g or more, or even 17.5 mmol/g or more. The upper limit value of the density of nitrogen element is not limited in particular, is, for example, 30 mmol/g, and may be 20 mmol/g. In the present description, the density of nitrogen element in the polymer P means the amount of substance of nitrogen element included in 1 g of the polymer P, and can be measured by the same method as the density d of nitrogen element in the above-described acidic gas adsorbent. When all nitrogen element included in the polymer P is derived from the amino group, the density of nitrogen element can be regarded as the density of the amino group in the polymer P.

The polymer P may include another functional group other than the amino group. Examples of the other functional group include a hydroxyl group, an ether group, an ester group, an amide group, and the like. The polymer P preferably includes an ether group as the other functional group.

The polymer P is preferably an amine polymer, particularly an amine polymer including a constitutional unit U1 derived from an epoxy monomer. This amine polymer may include a reaction product of a compound group including an amine monomer, particularly a reaction product P1 of a compound group including an amine monomer and an epoxy monomer.

The compound group for forming the reaction product P1 includes an amine monomer and an epoxy monomer as described above. The reaction product P1 may be a polymer of a monomer group including an amine monomer and an epoxy monomer (especially a polymer of an amine monomer and an epoxy monomer). The reaction product P1 may be a product (crosslinked product) in which an amine monomer is crosslinked by an epoxy monomer. The crosslinked product of the amine monomer by the epoxy monomer tends to have a high density of nitrogen element and also tends to have high heat resistance and moisture heat resistance. When the reaction product P1 having a crosslinked structure is to be produced, at least one selected from the group consisting of an amine monomer and an epoxy monomer is preferably a polyfunctional monomer having two or more functional groups, especially three or more functional groups.

The amine monomer is a monomer including at least one amino group and preferably includes at least one primary amino group. The number of the primary amino groups included in the amine monomer is preferably two or more, and may be three or more, or may be four or more. The upper limit value of the number of the primary amino groups is not limited in particular, and is, for example, 100, or may be 10. The amine monomer may include a secondary amino group and a tertiary amino group, in addition to the primary amino group, but does not have to include any tertiary amino group. The ratio of the number of primary amino groups relative to the number of all amino groups in the amine monomer is not limited in particular, is, for example, 10% or more, preferably 20% or more, and more preferably 30% or more, and may be 40% or more. The higher this ratio is, the more crosslinking points in the amine monomer there are and the denser the crosslinked structure in the reaction product P1 is, and therefore there is a tendency that heat resistance and moisture heat resistance are improved. The upper limit value of this ratio is not limited in particular, is, for example, 80%, and may be 60%.

The molecular weight (depending on the case, the weight-average molecular weight) of the amine monomer is, for example, 50 or more, and may be 100 or more, 150 or more, 200 or more, 300 or more, 500 or more, 1000 or more, or even 1500 or more. The higher the molecular weight of the amine monomer is, the easier it is to adjust the density of nitrogen element in the reaction product P1 to be large. Furthermore, an amine monomer having a higher molecular weight tends to be safer to handle. The upper limit value of the molecular weight of the amine monomer is, for example, 5000, and may be 2000 or less. Depending on the case, the molecular weight of the amine monomer is less than 1000, and may be 500 or less or even 300 or less. The amine equivalent of the amine monomer is, for example, 10 g/eq. or more, preferably 20 g/eq. or more, and more preferably 30 g/eq. or more. The larger the amine equivalent of the amine monomer is, the easier it is to adjust the density of nitrogen element in the reaction product P1 to be large. The upper limit value of the amine equivalent of the amine monomer is not limited in particular, is, for example, 200 g/eq. or less, and may be 150 g/eq. or less, 100 g/eq. or less, or even 50 g/eq. or less. In the present description, the amine equivalent means the mass of the amine monomer relative to one equivalent of active hydrogen of the primary amino group included in the amine monomer. When the amine monomer includes repeating units (constitutional units), the number of constitutional units included in the amine monomer (degree of polymerization thereof) is not limited in particular, and is 5 to 100, for example.

Examples of the amine monomer include: aliphatic amines such as ethylamine, ethylenediamine, 1,4-butylenediamine, 1,5-pentanediamine, 1,6-hexanediamine, 1,7-heptanediamine, 1,8-octanediamine, diethylenetriamine, triethylenetetramine, tetraethylenepentamine, pentaethylenehexamine, hexaethyleneheptamine, imino-bis-propylamine, bis(hexamethylene)triamine, 1,3,6-trisaminomethylhexane, tris(2-aminoethyl)amine, N,N'-bis(3-aminopropyl) ethylenediamine, polymethylenediamine, trimethylhexamethylenediamine, and polyetherdiamine; alicyclic amines such as isophoronediamine, menthanediamine, piperazine, N-aminoethylpiperazine, 3,9-bis(3-aminopropyl)-2,4,8,10-tetraoxaspiro(5,5)undecane adduct, bis(4-amino-3-methylcyclohexyl)methane, and bis(4-aminocyclohexyl)methane, and modified products of these; aliphatic polyamines such as polyethyleneimine and polyalkylene polyamine; (meth)acrylic polymers having an amino group such as aminoethylated acrylic polymer; aliphatic polyamideamines formed through reaction between polyamines and a dimer acid; and the like. The amine monomer preferably includes an aliphatic amine (especially, triethylenetetramine (TETA)) or an aliphatic polyamine (especially, polyethyleneimine (PEI)). The amine monomer can be used alone, or two types or more thereof may be used in combination.

The aliphatic polyamine, particularly PEI, tends to have high safety in handling. As an example, it is preferable that the amine monomer such as the aliphatic polyamine does not correspond to a hazardous material under the Fire Service Act, and it is preferable that the amine monomer such as the aliphatic polyamine does not correspond to an object substance under the Poisonous and Deleterious Substances Control Act. The amine monomer preferably has a negative mutagenicity test (Ames test) result. The amine monomer is preferably a mild or moderate irritant in a skin irritation test (primary skin irritation test using rabbits).

The epoxy monomer is a monomer including at least one epoxy group. The number of the epoxy groups included in the epoxy monomer is preferably two or more, and may be three or more, or may be four or more. The larger the number of the epoxy groups is, the more crosslinking points in the epoxy monomer there are and the denser the crosslinked structure in the reaction product P1 is, and therefore there is a tendency that heat resistance and moisture heat resistance are improved. The upper limit value of the number of the epoxy groups included in the epoxy monomer is not limited in particular, and is ten, for example.

The molecular weight of the epoxy monomer is not limited in particular, and is, for example, less than 1000 and preferably 500 or less. The epoxy equivalent of the epoxy monomer is not limited in particular, and is, for example, 150 g/eq. or less and preferably 100 g/eq. or less. The smaller the epoxy equivalent of the epoxy monomer is, the more the density of nitrogen element in the reaction product P1 tends to increase. The lower limit value of the epoxy equivalent of the epoxy monomer is not limited in particular, and is 50 g/eq., for example. The epoxy equivalent means the mass of the epoxy monomer per one equivalent of the epoxy group included in the epoxy monomer.

Examples of the epoxy monomer include: monofunctional epoxy compounds such as n-butyl glycidyl ether, higher alcohol glycidyl ether, allyl glycidyl ether, 2-ethylhexyl glycidyl ether, phenyl glycidyl ether, cresyl glycidyl ether, p-sec-butylphenyl glycidyl ether, and t-butylphenyl glycidyl ether; diepoxy alkanes such as 1,5-hexadiene diepoxide, 1,7-octadiene diepoxide, and 1,9-decadiene diepoxide; polyfunctional epoxy compounds having an ether group such as (poly) ethylene glycol diglycidyl ether, (poly)propylene glycol diglycidyl ether, 1,4-butanediol diglycidyl ether, neopentyl glycol diglycidyl ether, 1,6-hexanediol diglycidyl ether, trimethylolpropane polyglycidyl ether, pentaerythritol polyglycidyl ether, and sorbitol polyglycidyl ether; and polyfunctional epoxy compounds having an amino group such as N,N,N',N'-tetraglycidyl-m-xylenediamine and 1,3-bis(N,N-diglycidylaminomethyl)cyclohexane.

The epoxy monomer may be an aromatic epoxy resin, a non-aromatic epoxy resin, or the like, depending on the case. Examples of the aromatic epoxy resin include a polyphenyl-based epoxy resin, an epoxy resin including a fluorene ring, an epoxy resin including triglycidyl isocyanurate, an epoxy resin including a hetero aromatic ring (e.g., triazine ring), and the like. Examples of the polyphenyl-based epoxy resin include bisphenol A type epoxy resin, brominated bisphenol A type epoxy resin, bisphenol F type epoxy resin, bisphenol AD type epoxy resin, stilbene type epoxy resin, biphenyl type epoxy resin, bisphenol A novolak type epoxy resin, cresol novolak type epoxy resin, diaminodiphenylmethane type epoxy resin, tetrakis(hydroxyphenyl)ethane-based epoxy resin, and the like. Examples of the non-aromatic epoxy resin include aliphatic glycidyl ether type epoxy resin, aliphatic glycidyl ester type epoxy resin, alicyclic glycidyl ether type epoxy resin, alicyclic glycidyl amine type epoxy resin, alicyclic glycidyl ester type epoxy resin, and the like.

The epoxy monomer can be used alone, or two types or more thereof may be used in combination. When a monofunctional epoxy compound is used, the monofunctional epoxy compound is preferably used in combination with another epoxy monomer including two or more epoxy groups. The monofunctional epoxy compound can also be utilized as a reactive diluent for adjusting the viscosity of the compound group for forming the reaction product P1.

The epoxy monomer preferably includes a polyfunctional epoxy compound having an ether group such as ethylene glycol diglycidyl ether (EDE) and pentaerythritol tetraglycidyl ether (PETG). EDE and PETG have a small epoxy equivalent and can easily decrease a glass transition temperature Tg of the polymer P. These epoxy compounds also tend to have low cost. The epoxy monomer may include a polyfunctional epoxy compound having an amino group such as N,N,N',N'-tetraglycidyl-m-xylenediamine and 1,3-bis(N,N-diglycidylaminomethyl)cyclohexane, together with or instead of a polyfunctional epoxy compound having an ether group.

As described above, the polymer P as an amine polymer may include the constitutional unit U1 derived from an epoxy monomer. When the polymer P is the reaction product P1, the polymer P further includes a constitutional unit U2 derived from an amine monomer. The content of the constitutional unit U1 in the polymer P, in particular, the reaction product P1, is 20 wt% to 70 wt%, for example. The content of the constitutional unit U2 in the polymer P, in particular, the reaction product P1, is, for example, 30 wt% or more and preferably 50 wt% or more. The upper limit value of the content of the constitutional unit U2 is not limited in particular, and is 80 wt%, for example.

The glass transition temperature Tg of the polymer P is not limited in particular, is, for example, 40°C or less, and may be 30°C or less, 20°C or less, 15°C or less, 10°C or less, 5°C or less, 0°C or less, -1°C or less, less than -1°C, -2°C or less, -3°C or less, -4°C or less, -5°C or less, -6°C or less, -7°C or less, -8°C or less, -9°C or less, -10°C or less, -11°C or less, -12°C or less, -13°C or less, -14°C or less, or even -15°C or less. The lower the glass transition temperature Tg of the polymer P is, the higher the speed at which acidic gas is adsorbed by the acidic gas adsorbent tends to be. From the viewpoint of sufficiently ensuring the acidic gas adsorption ability of the acidic gas adsorbent, from the viewpoint of heat resistance, from the viewpoint of ease of production of the acidic gas adsorbent, etc., the lower limit of the glass transition temperature Tg of the polymer P is, for example, -100°C or more, and may be -50°C or more, -30°C or more, or even -20°C or more. In the present description, the glass transition temperature Tg means the midpoint glass transition temperature ($T_{mg}$) obtained according to the standards of JIS K7121:1987. Normally, the polymer P corresponds to a thermosetting resin. The polymer P is preferably solid at 25°C, preferably in the range of 25°C to 80°C.

The weight average molecular weight of the polymer P is not limited in particular, and is, for example, 500 or more, preferably 1000 or more, more preferably 10000 or more, and further preferably 100000 or more. The upper limit value of the weight average molecular weight of the polymer P is, for example, 10000000.

The acidic gas adsorbent preferably includes the polymer P as a main component. In the present description, the "main component" means a component most included on a weight basis in the acidic gas adsorbent. The content of the polymer P in the acidic gas adsorbent is, for example, 50 wt% or more, preferably 70 wt% or more, and more preferably 90 wt% or more, and may be 95 wt% or more, or may be 99 wt% or more. The acidic gas adsorbent may be substantially composed of only the polymer P. The higher the content of the polymer P is, the more the acidic gas adsorption ability of the acidic gas adsorbent tends to be improved.

The acidic gas adsorbent may be substantially composed of only the polymer P, and may further include another component other than the polymer P. Examples of the other component include a reaction accelerator, a plasticizer, a pigment, a dye, an anti-aging agent, a conductive material, an antistatic agent, an ultraviolet absorber, a flame retardant, an antioxidant, and the like. The reaction accelerator can be utilized when the polymer P is synthesized. Examples of the reaction accelerator include: tertiary amines such as triethylamine and tributylamine; and imidazoles such as 2-phenol-4-methylimidazole, 2-ethyl-4-methylimidazole, and 2-phenol-4,5-dihydroxyimidazole. These reaction accelerators can accelerate reaction for synthesizing the reaction product P1.

The weight ratio of nitrogen element in the acidic gas adsorbent is, for example, 5 wt% or more and preferably 10 wt% or more. The higher this weight ratio is, the more the acidic gas adsorption ability of the acidic gas adsorbent tends to be improved. The upper limit value of the weight ratio of nitrogen element in the acidic gas adsorbent is not limited in particular, and is 30 wt%, for example. When all nitrogen element included in the acidic gas adsorbent is derived from the amino group, the above weight ratio of nitrogen element can be regarded as the weight ratio of the amino group in the acidic gas adsorbent.

The shape of the acidic gas adsorbent is not limited in particular, and is, for example, a block shape, a sheet shape, a particulate shape, or the like. In the present description, the particulate shape includes a spherical shape, an ellipsoid shape, a flake shape, a fiber shape, and the like.

The acidic gas adsorbent may have a porous structure. As an example, the acidic gas adsorbent may include a porous body S including the polymer P. The porous body S is typically composed of only the polymer P. The shape of the porous body S is, for example, a block shape, a sheet shape, a particulate shape, or the like. The acidic gas adsorbent may include or may not necessarily include a porous resin sheet as the porous body S. The acidic gas adsorbent may include or may not necessarily include a member other than the porous body S, for example, a carrier for supporting the polymer P, and the like. When the acidic gas adsorbent does not include a carrier and the like, the shape of the acidic gas adsorbent tends to be able to be easily adjusted by cutting or machining.

The porous body S preferably has a three-dimensional network skeleton composed of the polymer P. The three-dimensional network skeleton may include the polymer P as a main component or may substantially only include the polymer P. The three-dimensional network skeleton may further include another component other than the polymer P. As an example, in the porous body S, the above three-dimensional network skeleton extends continuously. The pores included in the porous body S are, for example, continuous holes continuously formed in a three-dimensional manner. The porous body S may have independent holes, or may have through holes penetrating the porous body S.

The specific surface area of the acidic gas adsorbent (porous body S) is not limited in particular, is, for example, 0.5 $m^2$/g or more, and may be 1.0 $m^2$/g or more, 2.0 $m^2$/g or more, 3.0 $m^2$/g or more, 4.0 $m^2$/g or more, 5.0 $m^2$/g or more, 6.0 $m^2$/g or more, 7.0 $m^2$/g or more, 8.0 $m^2$/g or more, or even 9.0 $m^2$/g or more. The larger the specific surface area of the acidic gas adsorbent is, the more the speed at which acidic gas is adsorbed by the acidic gas adsorbent tends to increase. The upper limit value of the specific surface area of the acidic gas adsorbent is not limited in particular, and is 100 $m^2$/g, for example. The specific surface area of the acidic gas adsorbent means the BET (Brunauer-Emmett-Teller) specific surface area in terms of nitrogen gas adsorption. The specific surface area of the acidic gas adsorbent can be measured by a method conforming to JIS Z8830: 2013.

The present invention provides, in another aspect thereof, an acidic gas adsorbent including a polymer P having an amino group, wherein

a density d of nitrogen element in the acidic gas adsorbent is higher than 12.0 mmol/g,
the acidic gas adsorbent has a specific surface area of 0.5 $m^2$/g or more, and
the polymer P has a glass transition temperature of 40°C or less.

The acidic gas adsorbent preferably has the above-described adsorption and desorption properties for carbon dioxide. As an example, the adsorption amounts a1 to a3, the desorption amounts b1 and b2, the 50°C desorption rate, the 65°C desorption rate, and the like measured by the above-described methods with respect to the acidic gas adsorbent may satisfy the ranges exemplified above.

The pore volume of the acidic gas adsorbent (porous body S) is not limited in particular, is, for example, 0.1 $cm^3$/g or more, and may be 0.2 $cm^3$/g or more, 0.3 $cm^3$/g or more, 0.5 $cm^3$/g or more, 1.0 $cm^3$/g or more, or even 2.0 $cm^3$/g or more. The upper limit value of the pore volume of the acidic gas adsorbent is not limited in particular, is, for example, 5.0

$cm^3/g$, and may be 4.0 $cm^3/g$, or may be 3.0 $cm^3/g$. The pore volume of the acidic gas adsorbent can be measured by a mercury intrusion method. The mercury intrusion method is performed under a condition of an initial pressure of 21 kPa using a commercially available pore distribution analyzer (e.g., AutoPore V9620, manufactured by Micromeritics Instrument Corporation).

The average pore diameter of the acidic gas adsorbent (porous body S) is not limited in particular, is, for example, 0.1 μm or more, and may be 0.2 μm or more, 0.3 μm or more, or even 0.5 μm or more. The upper limit value of the average pore diameter of the acidic gas adsorbent is not limited in particular, and is 50 μm, for example. In the present description, the average pore diameter of the acidic gas adsorbent means a median diameter measured by a mercury intrusion method. The mercury intrusion method is performed under a condition of an initial pressure of 21 kPa using a commercially available pore distribution analyzer (e.g., AutoPore V9620, manufactured by Micromeritics Instrument Corporation).

When the acidic gas adsorbent has a particulate shape, the average particle diameter of the acidic gas adsorbent is not limited in particular, is, for example, 0.5 μm or more and preferably 1 μm or more, and may be 10 μm or more, may be 20 μm or more, or may be 30 μm or more. The average particle diameter of the acidic gas adsorbent may be 200 μm or less, may be 100 μm or less, or may be less than 75 μm. In the present description, the average particle diameter of the acidic gas adsorbent means a particle diameter (d50) corresponding to 50% of volume accumulation in a particle size distribution measured by a laser diffraction-type particle size meter or the like.

(Method for producing acidic gas adsorbent)

A method for producing the acidic gas adsorbent of the present embodiment preferably includes causing a compound group including an amine monomer having a primary amino group to react to synthesize a polymer P. It is preferable that the compound group further includes an epoxy monomer having an epoxy group.

The compound group may include only an epoxy monomer E1 including two epoxy groups, or may include an epoxy monomer E2 including three or more, for example, four epoxy groups, instead of or together with the epoxy monomer E1. When the compound group includes the epoxy monomers E1 and E2, the weight ratio E1/E2 of the epoxy monomer E1 relative to the epoxy monomer E2 is not limited in particular, is, for example, 3/7 to 8/2, and may be 3/7 to 5/5 or even 3/7 to 4/6.

In the present embodiment, it is preferable that a ratio E/A of an equivalent E of the epoxy group in the compound group relative to an equivalent A of active hydrogen of the primary amino group in the compound group is 1.00 or less. Specifically, the blending ratio between the amine monomer and the epoxy monomer is preferably adjusted such that the ratio E/A is 1.00 or less. In the compound group, the ratio E/A is preferably 0.90 or less and may be 0.50 or less, less than 0.50, 0.45 or less, 0.40 or less, 0.35 or less, or even 0.30 or less. The smaller the ratio E/A is, the more the ratio of the primary amino group in the polymer P tends to increase and the more the density d of nitrogen element in the acidic gas adsorbent tends to increase. From the viewpoint of ease of production of the acidic gas adsorbent, the lower limit of the ratio E/A is, for example, 0.10 or more and may be 0.15 or more or even 0.20 or more.

In the present embodiment, it is preferable that in the compound group, the primary amino group of the amine monomer reacts with the epoxy group of the epoxy monomer and a polymerization reaction or crosslinking reaction proceeds. The reaction of the compound group can be carried out by applying energy to the compound group. The energy that is applied to the compound group is preferably thermal energy. As an example, the reaction of the compound group can be caused to proceed by heating the compound group at a temperature of 40°C to 100°C. However, the energy that is applied to the compound group may be light energy.

The acidic gas adsorbent having the porous structure can be produced by the following method. First, the above compound group is mixed with a porogen to prepare a mixed solution. The porogen is a solvent that can dissolve the monomers included in the compound group and further can cause reaction-induced phase separation after the compound group reacts. Specific examples of the porogen include: cellosolves such as methyl cellosolve and ethyl cellosolve; esters such as ethylene glycol monomethyl ether acetate and propylene glycol monomethyl ether acetate; glycols such as polyethylene glycol, polypropylene glycol, polybutylene glycol, and polyoxyalkylene glycols; and ethers such as polyoxyethylene monomethyl ether and polyoxyethylene dimethyl ether. Specific examples of polyoxyalkylene glycols include poly(1,2-butanediol)-6 propylene glycol, polyoxypropylene glyceryl ether, and the like. The porogen may be a polar solvent such as ethyl acetate, N,N-dimethylformamide (DMF), acetonitrile, ethanol, and isopropanol, a non-polar solvent such as toluene, or a mixed solvent of these solvents. The porogen can be used alone, or two types or more thereof may be used in combination.

Another component other than the compound group may be further added to the mixed solution. Examples of the other component include the reaction accelerators described above, and the like.

Next, the compound group is caused to react in the mixed solution. As an example, the compound group is caused to react by filling a mold with the mixed solution and performing heat treatment. Accordingly, a cured body including the polymer P and the porogen is obtained. In the cured body, a co-continuous structure is formed by phase separation of the polymer P and the porogen.

Next, the porogen is extracted and removed from the cured body. Accordingly, an acidic gas adsorbent having a porous structure can be obtained. Extraction of the porogen can be performed by immersing the cured body in a solvent. As this solvent, water, aliphatic hydrocarbon solvents, aromatic hydrocarbon solvents, aliphatic alcohol solvents, ester solvents, ether solvents, halogen-containing organic solvents, and the like can be used. Examples of aliphatic hydrocarbon solvents include n-hexane, cyclohexane, methylcyclohexane, n-heptane, n-octane, isooctane, petroleum ether, benzine, and the like. Examples of aromatic hydrocarbon solvents include toluene, xylene, mesitylene, benzene, and the like. Examples of aliphatic alcohol solvents include methanol, ethanol, isopropanol, butanol, cyclohexanol, ethylene glycol, propylene glycol, propylene glycol monomethyl ether, diethylene glycol, and the like. Examples of ester solvents include ethyl acetate, and the like. Examples of ether solvents include diethyl ether, diisopropyl ether, dibutyl ether, ethylene glycol dimethyl ether, ethylene glycol diethyl ether, propylene glycol dimethyl ether, propylene glycol diethyl ether, diethylene glycol dimethyl ether, tetrahydrofuran, dioxane, anisole, and the like. Examples of halogen-containing organic solvents include dichloromethane, chloroform, carbon tetrachloride, dichloroethane, chlorobenzene, and the like. These solvents can be used individually, or two types or more thereof may be used in combination.

The higher the reaction rate of the compound group is when the cured body is produced, the more finely the porogen tends to be dispersed in the cured body. By removing the porogen from the cured body in which the porogen is finely dispersed, an acidic gas adsorbent having a large specific surface area can be produced. The reaction rate of the compound group varies in accordance with the types and the blending ratio of the monomers included in the compound group, etc. As an example, the reaction rate of the compound group tends to be high, for example, when the epoxy monomer E2 including three or more, for example, four epoxy groups is used, or when a polyethyleneimine having a high weight average molecular weight is used as the amine monomer.

(Usage of acidic gas adsorbent)

The acidic gas adsorbent of the present embodiment can adsorb acidic gas. Examples of the acidic gas include carbon dioxide, hydrogen sulfide, carbonyl sulfide, sulfur oxide (SOx), hydrogen cyanide, and nitrogen oxide (NOx), and preferably, the acidic gas is carbon dioxide.

The acidic gas adsorbent can be used according to the following method. First, mixed gas including acidic gas is brought into contact with the acidic gas adsorbent. The mixed gas preferably includes another gas other than acidic gas. Examples of the other gas include nonpolar gas such as hydrogen or nitrogen, and inert gas such as helium, and preferably, the other gas is nitrogen. Typically, the mixed gas is atmospheric air. The mixed gas may be off-gas from a chemical plant or thermal power generation.

The temperature of the mixed gas is room temperature (23°C), for example. The concentration of acidic gas in the mixed gas is not limited in particular, and in a standard state (0°C, 101 kPa), is, for example, 0.01 vol% (100 vol ppm) or more and preferably 0.04 vol% (400 vol ppm) or more, and may be 1.0 vol% or more. The upper limit value of the concentration of carbon dioxide in the mixed gas is not limited in particular, and in a standard state, is 10 vol%, for example. Typically, the pressure of the mixed gas is equal to that of atmospheric air in the use environment of the acidic gas adsorbent. However, the mixed gas that is brought into contact with the acidic gas adsorbent may be pressurized.

The acidic gas adsorbent having come into contact with the mixed gas adsorbs acidic gas included in the mixed gas. Operation of bringing the mixed gas into contact with the acidic gas adsorbent is preferably performed until acidic gas adsorption by the acidic gas adsorbent reaches equilibrium.

Next, a regeneration process is performed with respect to the acidic gas adsorbent having adsorbed acidic gas. The regeneration process can be performed by heating the acidic gas adsorbent. The heating temperature of the acidic gas adsorbent is 50 to 80°C, for example. The acidic gas adsorbent may be heated in a reduced-pressure atmosphere or a vacuum atmosphere. Through the heating of the acidic gas adsorbent, acidic gas is desorbed from the acidic gas adsorbent. Accordingly, the acidic gas adsorbent is regenerated and the acidic gas adsorbent can be repeatedly used. The acidic gas, in particular, carbon dioxide, desorbed from the acidic gas adsorbent can be utilized as synthesis raw material for chemicals or dry ice. The adsorption operation of acidic gas by means of the acidic gas adsorbent and the regeneration process of the acidic gas adsorbent can be performed by using the measurement device 20 (acidic gas adsorption device) described above.

<Embodiment of structure>

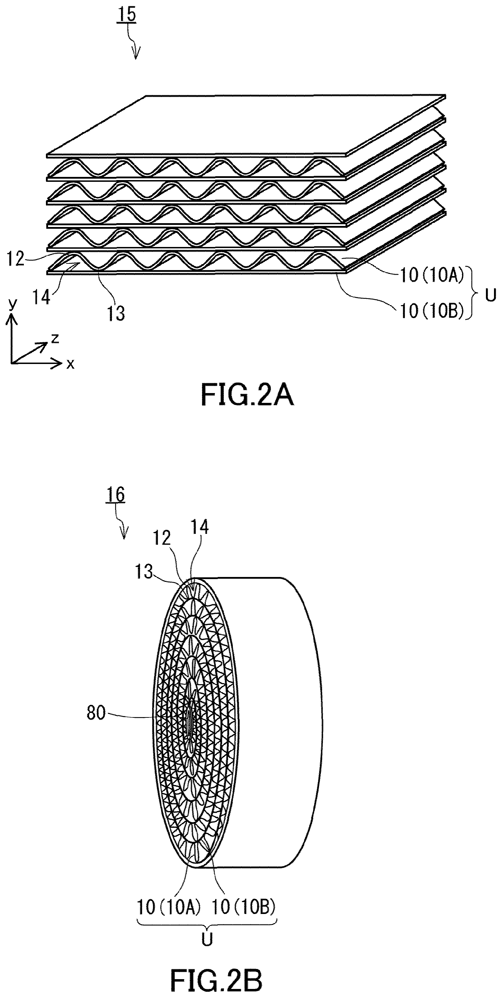

As shown in FIG. 2A, a structure 15 of the present embodiment includes an acidic gas adsorbent 10 as described above and an air flow path 14. The structure 15 is typically a honeycomb structure having a plurality of air flow paths 14 extending in the same direction.

The acidic gas adsorbent 10 included in the structure 15 typically has a sheet shape. The structure 15 may or may not necessarily include a support supporting the acidic gas adsorbent 10, together with the acidic gas adsorbent 10.

The structure 15 preferably includes an adsorbent unit U in which a corrugated acidic gas adsorbent 10A and a flat plate-shaped acidic gas adsorbent 10B are stacked. In the acidic gas adsorbent 10A, a plurality of hill portions 12 and a plurality of valley portions 13 are alternately aligned. The air flow path 14 is formed between each hill portion 12 or each valley portion 13 of the acidic gas adsorbent 10A and the acidic gas adsorbent 10B. In the present embodiment, a direction x is a direction (wave direction) in which the plurality of hill portions 12 and the plurality of valley portions 13 of the acidic gas adsorbent 10A are alternately aligned. A direction y is a direction in which the acidic gas adsorbents 10A and 10B are stacked in the adsorbent unit U. A direction z is a direction that is orthogonal to each of the directions x and y and in which the air flow paths 14 extend.

The structure 15 preferably includes a plurality of adsorbent units U. The number of adsorbent units U in the structure 15 is not limited in particular, and is 2 to 100, for example. In the structure 15, the plurality of adsorbent units U are stacked in the direction y such that a plurality of acidic gas adsorbents 10A and a plurality of acidic gas adsorbents 10B are alternately aligned. When the plurality of adsorbent units U are stacked, the structure 15 has a block shape.

Each air flow path 14 is a through hole penetrating the structure 15 in the direction z. The air flow path 14 is surrounded by the acidic gas adsorbents 10A and 10B. In the structure 15, acidic gas is efficiently adsorbed by the acidic gas adsorbents 10A and 10B while moving in the direction z through the air flow path 14.

In the structure 15, the smaller the thicknesses of the acidic gas adsorbents 10A and 10B are, the larger the cross-sectional area of each air flow path 14 can be adjusted. The structure 15 in which the cross-sectional area of each air flow path 14 is large is suitable for reducing the pressure loss that occurs, for example, when in contact with acidic gas. With the structure 15 having reduced pressure loss, the power of a fan used to move acidic gas can be reduced. If the amount of substance of the amino group per unit volume of the acidic gas adsorbent 10 is large, there is a tendency that acidic gas can be sufficiently adsorbed even if the thickness of the acidic gas adsorbent 10 is small.

<Modification of structure>

The shape of the structure 15 including the acidic gas adsorbents 10 is not limited to the one shown in FIG. 2A. A structure 16 shown in FIG. 2B has a shape in which one adsorbent unit U is wound on a center tube 80. Except for this, the configuration of the structure 16 is the same as that of the structure 15.

The structure 16 has a columnar shape. In the structure 16, the plurality of hill portions 12 and the plurality of valley portions 13 of the acidic gas adsorbent 10A are alternately aligned in the circumferential direction of the structure 16. The air flow path 14 formed between each hill portion 12 or each valley portion 13 of the acidic gas adsorbent 10A and the acidic gas adsorbent 10B penetrates the structure 16 in a direction in which the center tube 80 extends. In the structure 16, acidic gas is efficiently adsorbed by the acidic gas adsorbents 10A and 10B while moving through the air flow path 14 in the direction in which the center tube 80 extends.

<Another modification of structure>

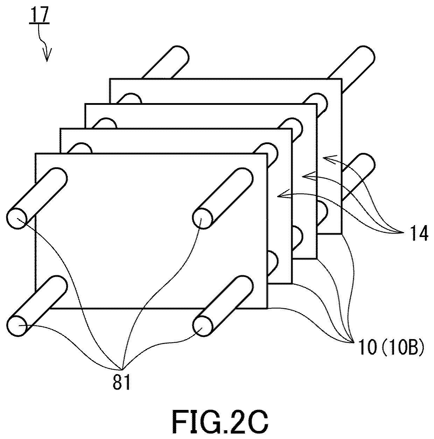

The structure does not have to include the acidic gas adsorbent 10A having a corrugated shape, and does not have to be a honeycomb structure such as the structures 15 and 16. A structure 17 shown in FIG. 2C includes only an acidic gas adsorbent 10B having a flat plate shape as the acidic gas adsorbent 10. Specifically, the structure 17 includes a plurality of acidic gas adsorbents 10B, and the plurality of acidic gas adsorbents 10B are aligned with voids therebetween. The void between two acidic gas adsorbents 10B serves as an air flow path 14.

The structure 17 may further include a fixing member 81 which fixes the plurality of acidic gas adsorbents 10B in order to ensure the above-described air flow paths 14. The fixing member 81 is, for example, a rod. As an example, a through hole is formed in each of the plurality of acidic gas adsorbents 10B so as to penetrate the acidic gas adsorbent 10B in the thickness direction thereof, and the plurality of acidic gas adsorbents 10B are fixed by inserting the rod as the fixing member 81 into the through hole of each acidic gas adsorbent 10B. The rod as the fixing member 81 may be a bolt having an external thread formed on a side surface thereof. In this case, the air flow path 14 can be more reliably ensured by screwing a nut onto the bolt at a position between two acidic gas adsorbents 10B. In this example, the nut serves as a spacer.

In the example of FIG. 2C, the plurality of acidic gas adsorbents 10B each have a rectangular shape in a plan view, and have through holes formed near four corners thereof. Furthermore, an acidic gas adsorbent 10C includes four fixing members 81, and the four fixing members 81 are inserted into the four through holes formed at the four corners of each acidic gas adsorbent 10B, respectively. However, the number and the positions of through holes formed in each acidic gas adsorbent 10B and the number of fixing members 81 are not limited to the example of FIG. 2C.

In the structure 17, acidic gas is efficiently adsorbed by two acidic gas adsorbents 10B while moving through the air flow path 14 between the two acidic gas adsorbents 10B.

<Embodiment of acidic gas recovery device>

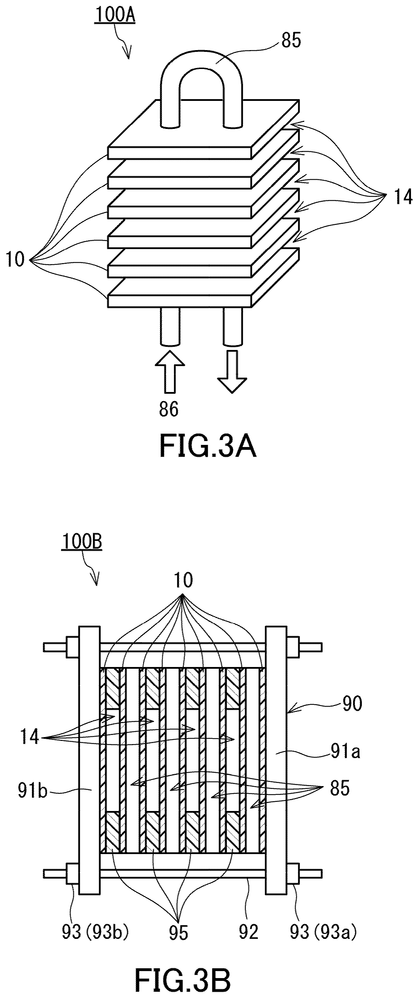

As shown in FIG. 3A, an acidic gas recovery device 100A of the present embodiment includes the above-described acidic gas adsorbent 10 and a medium path 85. In the acidic gas recovery device 100A, during desorption operation in which acidic gas adsorbed by the acidic gas adsorbent 10 is desorbed from the acidic gas adsorbent 10, a heat medium 86 which heats the acidic gas adsorbent 10 passes through the medium path 85.

The acidic gas adsorbent 10 included in the acidic gas recovery device 100A typically has a sheet shape. The acidic gas recovery device 100A may include or may not necessarily include a support supporting the acidic gas adsorbent 10, together with the acidic gas adsorbent 10.

The acidic gas recovery device 100A preferably includes a plurality of acidic gas adsorbents 10. The plurality of acidic gas adsorbents 10 may be aligned with voids therebetween, and the void between two acidic gas adsorbents 10 may serve as an air flow path 14. In the acidic gas recovery device 100A, the configurations of the acidic gas adsorbents 10 and the air flow paths 14 may be the same as those described for the structures 15 to 17.

In the acidic gas recovery device 100A, the medium path 85 is preferably composed of a pipe made of a metal such as copper, specifically, a heat transfer tube. In the acidic gas recovery device 100A, the medium path 85 may penetrate each acidic gas adsorbent 10 in the thickness direction of the acidic gas adsorbent 10. Specifically, in the acidic gas adsorbents 10, through holes are formed so as to penetrate the acidic gas adsorbents 10 in the thickness direction thereof, and the medium path 85 is inserted into the through holes of the acidic gas adsorbents 10. The acidic gas recovery device 100A typically has a structure similar to that of a fin tube heat exchanger including heat transfer fins and a heat transfer tube penetrating the heat transfer fins.

The medium path 85 may have a U-shape, and may be inserted into two through holes formed in each acidic gas adsorbent 10. The number of through holes formed in each acidic gas adsorbent 10 and the number of medium paths 85 are not limited to those shown in FIG. 3A. As an example, four or more through holes may be formed in each acidic gas adsorbent 10, and two or more medium paths 85 each having a U-shape may be inserted into the through holes of each acidic gas adsorbent 10.

As described above, the medium path 85 serves as a path for the heat medium 86 which heats the acidic gas adsorbent 10 during desorption operation. However, the medium path 85 can also be used as a path for a cooling medium that cools the acidic gas adsorbent 10 after the desorption operation. That is, the medium path 85 may serve as both a path for the heat medium 86 and a path for the cooling medium.

The acidic gas recovery device 100A further includes a casing (not shown) in which the acidic gas adsorbents 10 and the medium path 85 are housed. The casing preferably has a mixed gas inlet for sending a mixed gas including acidic gas into the interior of the casing. The casing may further have a desorption gas outlet for discharging desorption gas desorbed from the acidic gas adsorbents 10, to the outside of the casing during desorption operation, and a purge gas inlet for sending purge gas to the inside of the casing. In the casing, the mixed gas inlet may also serve as a purge gas inlet. Furthermore, the casing may have a medium inlet for sending the heat medium 86 or the cooling medium to the medium path 85 and a medium outlet for discharging the heat medium 86 or the cooling medium from the medium path 85.

[Method for operating acidic gas recovery device]

It is preferable that the acidic gas recovery device 100A repeatedly performs adsorption operation in which acidic gas is adsorbed by the acidic gas adsorbents 10 and desorption operation in which acidic gas adsorbed by the acidic gas adsorbents 10 is desorbed from the acidic gas adsorbents 10, for example. Acidic gas can be recovered by performing adsorption operation and desorption operation using the acidic gas recovery device 100A.

(Adsorption operation)

The adsorption operation of the acidic gas recovery device 100A is performed as follows. First, mixed gas including acidic gas is sent to the interior of the casing through the above-described mixed gas inlet. Examples of the mixed gas include those described above. The mixed gas comes into contact with the acidic gas adsorbents 10 while moving through the air flow paths 14. Accordingly, the acidic gas adsorbents 10 adsorb the acidic gas included in the mixed gas. The adsorption operation is preferably performed until acidic gas adsorption by the acidic gas adsorbents 10 reaches equilibrium.

(Desorption operation)

The desorption operation of the acidic gas recovery device 100A is performed as follows. First, purge gas is sent to the interior of the casing through the above-described purge gas inlet, and the purge gas is discharged to the outside of the casing through the desorption gas outlet. By this operation, the mixed gas remaining inside the casing can be discharged to the outside of the casing, and the interior of the casing can be filled with the purge gas. As the purge gas, for example, water vapor gas or gas including acidic gas such as carbon dioxide at a high concentration can be used. Instead of or together with the operation of sending the purge gas to the interior of the casing, an operation of depressurizing the interior of the casing may be performed. This depressurization operation can be performed by a depressurization device connected to the desorption gas outlet of the casing, or the like.

Next, in a state where the purge gas is supplied to the interior of the casing, the heat medium 86 is sent to the medium path 85. As the heat medium 86, hot water, high-temperature gas, or the like can be used. Specific examples of gas included in the high-temperature gas include chlorofluorocarbon, carbon dioxide, air, water vapor, and the like. The heat medium 86 can be prepared utilizing, for example, waste heat, a heat pump, self-heat regeneration, or the like.

By sending the heat medium 86 to the medium path 85, heat exchange occurs between the heat medium 86 and the acidic gas adsorbents 10 via the medium path 85, and the acidic gas adsorbents 10 are heated. The heating temperature of each acidic gas adsorbent 10 is 50 to 80°C, for example. Accordingly, the acidic gas is desorbed from the acidic gas adsorbents 10. The desorption gas desorbed from the acidic gas adsorbents 10 is discharged through the desorption gas outlet together with the purge gas. Accordingly, the acidic gas can be recovered. When the purge gas includes water vapor, the water vapor can be removed by cooling the purge gas discharged through the desorption gas outlet and condensing the water vapor. It is not necessarily necessary to use the heat medium 86 in order to heat the acidic gas adsorbents 10. When supports supporting the acidic gas adsorbents 10 serve as planar heaters, the acidic gas adsorbents 10 may be heated by energizing the supports.

The acidic gas recovery device 100A is configured such that the heat medium 86 does not come into direct contact with the desorption gas during the desorption operation. With the acidic gas recovery device 100A, acidic gas can be efficiently recovered. The recovered acidic gas, in particular, carbon dioxide, can be utilized as synthesis raw material for chemicals or dry ice.

(Preparation operation)

The acidic gas recovery device 100A may perform preparation operation for performing the adsorption operation after the desorption operation. The preparation operation is performed as follows. First, the supply of the purge gas to the interior of the casing is stopped, and the heat medium 86 is also discharged from the medium path 85. Next, a cooling medium is sent to the medium path 85. As the cooling medium, an antifreeze or the like can be used. Heat exchange occurs between the cooling medium and the acidic gas adsorbents 10 via the medium path 85, and the acidic gas adsorbents 10 are cooled. The acidic gas adsorbents 10 are preferably cooled to normal temperature (25°C). After the acidic gas adsorbents 10 are cooled, the preparation for the adsorption operation is completed by discharging the cooling medium from the medium path 85.

<Modification of acidic gas recovery device>

The acidic gas recovery device is not limited to the one shown in FIG. 3A. For example, in an acidic gas recovery device 100B shown in FIG. 3B, a medium path 85 is formed between two acidic gas adsorbents 10. Specifically, in the acidic gas recovery device 100B, among a plurality of voids formed between a plurality of acidic gas adsorbents 10, some voids serve as medium paths 85, and the remaining voids serve as air flow paths 14. The medium paths 85 and the air flow paths 14 are alternately aligned along the arrangement direction in which the plurality of acidic gas adsorbents 10 are arranged. The acidic gas recovery device 100B typically has a structure similar to that of a plate heat exchanger in which a plurality of heat transfer plates are stacked.

The acidic gas recovery device 100B preferably includes supports supporting the acidic gas adsorbents 10, together with the acidic gas adsorbents 10. In the acidic gas recovery device 100B, it is preferable that each acidic gas adsorbent 10 faces the air flow path 14, and each support faces the medium path 85. In the acidic gas recovery device 100B, a spacer 95 is disposed in each air flow path 14, and a spacer (not shown) is also disposed in each medium path 85. These spacers are configured to ensure the air flow paths 14 and the medium paths 85, introduce an appropriate fluid into each path, and also prevent the fluid from leaking into other paths. In FIG. 3B, each air flow path 14 may be connected to the external space of the acidic gas recovery device 100B on the far side and the near side of the drawing sheet thereof, thereby allowing mixed gas to be taken into the air flow path 14 from the external space. Furthermore, a member may be disposed between each air flow path 14 and the external space so as to block the connection therebetween during desorption operation of the acidic gas recovery device 100B.

The acidic gas recovery device 100B further includes a restraining member 90 which restrains the plurality of acidic gas adsorbents 10. The restraining member 90 preferably has a pair of plate members 91a and 91b, a rod 92, and fixing members 93. The plate members 91a and 91b are aligned in the arrangement direction of the plurality of acidic gas adsorbents 10, and sandwich the plurality of acidic gas adsorbents 10. With the plate members 91a and 91b, a pressure can be applied to the plurality of acidic gas adsorbents 10 in the arrangement direction thereof. In the plate members 91a and 91b, the desorption gas outlet, the purge gas inlet, the medium inlet, the medium outlet, and the like which are described above for the acidic gas recovery device 100A may be formed.

Through holes are formed in the plate members 91a and 91b, respectively, and the rod 92 is inserted into the through holes of the plate members 91a and 91b. The rod 92 may be a bolt having an external thread formed on a side surface thereof. Each fixing member 93 can fix one plate member out of the plate members 91a and 91b and the rod 92 to each other. The fixing member 93 is typically a nut having an internal thread that can be screwed with the rod 92. The restraining member 90 has a fixing member 93a which fixes the plate member 91a and the rod 92 to each other, and a fixing member 93b which fixes the plate member 91b and the rod 92 to each other.

In the example of FIG. 3B, two rods 92 are fixed by the fixing members 93, respectively. However, the number of rods 92, etc., are not limited to the example of FIG. 3B.

For the acidic gas recovery device 100B, the same operation method as the operation method described above for the acidic gas recovery device 100A can be performed. In the acidic gas recovery device 100B, a medium path 85 is formed between two acidic gas adsorbents 10. With this configuration, the entirety of each acidic gas adsorbent 10 can be uniformly heated by the heat medium passing through each medium path 85 in the desorption operation.

Furthermore, unlike the acidic gas recovery device 100A, the acidic gas recovery device 100B is configured such that the air flow paths 14 do not interfere with the medium paths 85. Therefore, in the acidic gas recovery device 100B, the pressure loss caused by the mixed gas passing through the air flow paths 14 in the adsorption operation tends to be small.

Components such as the acidic gas adsorbents 10 are more easily detached from the acidic gas recovery device 100B than the acidic gas recovery device 100A. By detaching the acidic gas adsorbents 10 from the acidic gas recovery device 100B, it is easier to perform replacement of the acidic gas adsorbents 10. Furthermore, by detaching each component of the acidic gas recovery device 100B, it is easier to perform maintenance such as cleaning operations on each component.

[Example]

In the following, the present invention will be described in further detail using Examples and Comparative Examples. However, the present invention is not limited thereto.

(Example 1)

First, 1.06 g of poly(1,2-butanediol)-6 propylene glycol (UNIOL (registered trademark) PB-500, manufactured by NOF CORPORATION) and 1.06 g of a copolymer of butylene glycol and propylene glycol (UNIOL (registered trademark) PB-700, manufactured by NOF CORPORATION) were added to a 6-mL screw tube bottle (manufactured by AS ONE Corporation). In the obtained mixed solution, 0.91 g of ethylene glycol diglycidyl ether (EX-810, manufactured by Nagase ChemteX Corporation) was dissolved, to prepare a mixed solution of an epoxy monomer and a porogen.

Next, 2.02 g of polyethyleneimine (EPOMIN SP-012, manufactured by NIPPON SHOKUBAI CO., LTD.) was added to this mixed solution to prepare a mixed solution of the epoxy monomer, an amine monomer, and the porogen. In this mixed solution, the ratio E/A of an equivalent E of the epoxy group included in the epoxy monomer relative to an equivalent A of active hydrogen of the primary amino group included in the amine monomer was 0.3.

Next, a tabletop shaker (Angel Vibrator Digital 60 Hz) was set to intensity 5, and the mixed solution was shaken for 2 minutes. Then, the mixed solution was cured by allowing the mixed solution to stand in a thermostatic bath at 80°C for 2 hours. Accordingly, a block-shaped cured body including a polymer P having an amino group was obtained. The cured body was taken out from the screw tube bottle and cut into about 3 mm squares. Next, an operation of immersing the cured body in ethyl acetate at 60°C for 1 hour was repeated twice with liquid replacement. Accordingly, the porogen was removed from the cured body to form a porous body including the polymer P. The porous body was dried at 60°C for 1 hour and further vacuum-dried for 2 hours to obtain an acidic gas adsorbent of Example 1.

(Examples 2 to 11)

Acidic gas adsorbents of Examples 2 to 11 were obtained by the same method as in Example 1, except that the types and the blending amounts of the raw materials were changed as shown in Table 1.

(Comparative Example 1)

First, 2.63 g of polypropylene glycol (ADEKA POLYETHER P-400, manufactured by ADEKA Corporation) and 0.36 g of polyethylene glycol (manufactured by Sigma-Aldrich Co. LLC., average molecular weight: 200) were added to a 6-mL screw tube bottle (manufactured by AS ONE Corporation). In the obtained mixed solution, 1.58 g of a bisphenol A type epoxy resin (JER828, manufactured by Mitsubishi Chemical Corporation) was dissolved, to prepare a mixed solution of an epoxy monomer and a porogen.

Next, 0.60 g of triethylenetetramine was added to this mixed solution to prepare a mixed solution of the epoxy monomer, an amine monomer, and the porogen. In this mixed solution, the ratio E/A of an equivalent E of the epoxy group included in the epoxy monomer relative to an equivalent A of active hydrogen of the primary amino group included in the amine monomer was 0.5.

Next, a tabletop shaker (Angel Vibrator Digital 60 Hz) was set to intensity 5, and the mixed solution was shaken for 2 minutes. Then, the mixed solution was cured by allowing the mixed solution to stand in a thermostatic bath at 80°C for 4 hours. Accordingly, a block-shaped cured body including a polymer having an amino group was obtained. The cured body was taken out from the screw tube bottle and cut into about 3 mm squares. Next, an operation of immersing the cured body in isopropyl alcohol at 60°C for 1 hour was repeated twice with liquid replacement. Furthermore, an operation of immersing the cured body in ultrapure water at 60°C for 1 hour was repeated twice with liquid replacement. Next, the cured body was immersed in methanol at room temperature for 1 hour. The cured body was air-dried at room temperature for 12 hours and further vacuum-dried at 60°C for 8 hours to obtain an acidic gas adsorbent of Comparative Example 1.

(Comparative Examples 2 and 3)

Acidic gas adsorbents of Comparative Examples 2 and 3 were obtained by the same method as in Comparative Example 1, except that the types and the blending amounts of the raw materials were changed as shown in Table 1.

[Density of nitrogen element]

With respect to the produced acidic gas adsorbents, the density d of nitrogen element was measured by the above-described method. As a CHN elemental analyzer, Vario EL III manufactured by Elementar was used.

[Specific surface area]

With respect to the produced acidic gas adsorbents, the specific surface area was measured by a method conforming to the standards of JIS Z8830: 2013. For the measurement, a specific surface area measurement device (trade name "BERSORP-mini", manufactured by MicrotracBEL Corporation) was used.

[Glass transition temperature Tg]

With respect to the polymers included in the produced acidic gas adsorbents, the glass transition temperature Tg was measured by the following method. First, about 5 mg of each acidic gas adsorbent was set in a differential scanning calorimeter (DSC2500, manufactured by TA Instruments). Using this device, the temperature was increased from 30°C to 200°C at a temperature increase rate of 10°C/min in a nitrogen atmosphere and maintained at that temperature for 1 minute. Next, the acidic gas adsorbent was cooled to -50°C at a temperature decrease rate of 10°C/min and maintained at that temperature for 1 minute, and then the temperature was increased to 200°C at a temperature increase rate of 10°C/min. In a DSC curve at the second temperature increase, a first baseline before specific heat change appeared, a second baseline after specific heat change appeared, and a tangent line passing through a point at which the slope became maximum among bent portions due to the specific heat change, were identified. The intermediate temperature between the intersection of the first baseline and the tangent line and the intersection of the second baseline and the tangent line was identified as the glass transition temperature Tg.

[Near-infrared spectroscopy]

In Examples 1 to 6, with respect to the polymers included in the produced acidic gas adsorbents, near-infrared spectroscopy (NIR) was performed by the following method. First, a transparent test piece was produced by press-molding the polymer. Next, the test piece was set in an infrared spectrophotometer (INVENIO S, HYPERION 3000, manufactured by Bruker Corporation) such that the transparent part could be analyzed. By performing NIR with respect to the test piece, spectral data was obtained. In the spectral data, the peak intensity $I_A$ of the absorption peak existing around a wavenumber of 4930 cm$^{-1}$ and the peak intensity $I_B$ of the absorption peak existing around a wavenumber of 6500 cm$^{-1}$ were specified, and the ratio $I_A/I_B$ was calculated.

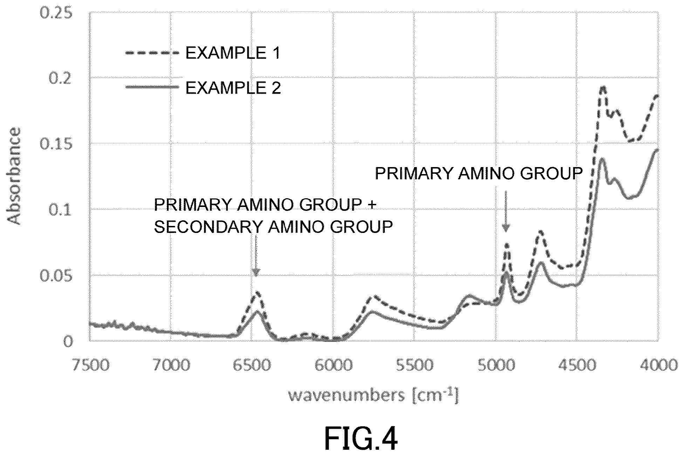

FIG. 4 shows near-infrared absorption spectra showing the results of NIR performed with respect to the polymers produced in Example 1 and Example 2. As can be seen from FIG. 4, in each near-infrared absorption spectrum, an absorption peak derived from the primary amino group and the secondary amino group was observed around a wavenumber of 6500 cm$^{-1}$, and an absorption peak derived from the primary amino group was observed around wavenumber of 4930 cm$^{-1}$.

[Adsorption amount of carbon dioxide]

With respect to the produced acidic gas adsorbents produced in the Examples, the adsorption amounts a1 to a3 and the desorption amount b1 were measured by the above-described methods. Furthermore, on the basis of these results, the rate (65°C desorption rate) of the desorption amount b1 (mmol/g) relative to the adsorption amount a1 (mmol/g) was calculated. With respect to the acidic gas adsorbents produced in the Comparative Examples, the adsorption amount a1 was measured by the above-described method.

[Table 1]

| | Epoxy monomer E1 | | Epoxy monomer E2 | | Weight ratio E1/E2 (*1) | Amine monomer | |
| --- | --- | --- | --- | --- | --- | --- | --- |
| | Type | Blending amount (g) | Type | Blending amount (g) | | Type | Blending amount (g) |
| Example 1 | EDE | 0.91 | - | - | - | PEI1200 | 2.02 |
| Example 2 | EDE | 1.11 | - | - | - | PEI1200 | 1.84 |
| Example 3 | EDE | 0.29 | PETG | 0.43 | 4/6 | PEI1200 | 2.22 |
| Example 4 | EDE | 0.33 | PETG | 0.50 | 4/6 | PEI1200 | 2.13 |
| Example 5 | EDE | 0.41 | PETG | 0.62 | 4/6 | PEI1200 | 1.97 |
| Example 6 | EDE | 0.34 | T-X | 0.51 | 4/6 | PEI1200 | 2.05 |
| Example 7 | EDE | 1.04 | T-C | 0.45 | 7/3 | PEI300 | 1.44 |
| Example 8 | EDE | 0.89 | T-C | 0.59 | 6/4 | PEI300 | 1.44 |
| Example 9 | EDE | 1.28 | - | - | - | PEI1200 | 1.70 |
| Example 10 | EDE | 1.28 | - | - | - | PEI1800 | 1.70 |
| Example 11 | EDE | 0.73 | T-X | 0.73 | 5/5 | PEI300 | 1.47 |
| Comparative Example 1 | JER828 | 1.58 | - | - | - | TETA | 0.60 |
| Comparative Example 2 | JER828 | 1.80 | - | - | - | TETA | 0.43 |
| Comparative Example 3 | JER828 | 1.86 | - | - | - | TETA | 0.35 |

(*1) The weight ratio E1/E2 of the epoxy monomer E1 relative to the epoxy monomer E2

[Table 1] (cont.)

| | Equivalent ratio E/A (*2) | Porogen p1 | | Porogen p2 | |
| --- | --- | --- | --- | --- | --- |
| | | Type | Blending amount (g) | Type | Blending amount (g) |
| Example 1 | 0.3 | PB-500 | 1.06 | PB-700 | 1.06 |
| Example 2 | 0.4 | PB-500 | 1.71 | PB-700 | 0.43 |
| Example 3 | 0.25 | PB-500 | 0.21 | PB-700 | 1.89 |
| Example 4 | 0.3 | PB-500 | - | PB-700 | 2.10 |
| Example 5 | 0.4 | PB-500 | - | PB-700 | 2.09 |
| Example 6 | 0.3 | PB-500 | 0.85 | PB-700 | 1.28 |
| Example 7 | 0.5 | PB-500 | 1.74 | DGP-700 | 0.43 |
| Example 8 | 0.5 | PB-500 | 1.74 | DGP-700 | 0.44 |
| Example 9 | 0.5 | PB-500 | 1.50 | PB-700 | 0.64 |
| Example 10 | 0.5 | PB-500 | 1.06 | PB-700 | 1.06 |
| Example 11 | 0.5 | PB-500 | 1.53 | DGP-700 | 0.66 |
| Comparative Example 1 | 0.5 | P-400 | 2.63 | PEG | 0.36 |

(continued)

| | Equivalent ratio E/A (*2) | Porogen p1 | | Porogen p2 | |
|---|---|---|---|---|---|
| | | Type | Blending amount (g) | Type | Blending amount (g) |
| Comparative Example 2 | 0.8 | P-400 | 2.65 | PEG | 0.36 |
| Comparative Example 3 | 1.0 | P-400 | 2.62 | PEG | 0.36 |
| (*2) The ratio E/A of the equivalent E of the epoxy group in the epoxy monomer relative to the equivalent A of active hydrogen of the primary amino group in the amine monomer | | | | | |

The abbreviations in Table 1 are as follows.

EDE: ethylene glycol diglycidyl ether (EX-810, manufactured by Nagase ChemteX Corporation)
JER828: bisphenol A type epoxy resin (JER828, manufactured by Mitsubishi Chemical Corporation)
PETG: pentaerythritol tetraglycidyl ether (SHOFREE (registered trademark) PETG, manufactured by Showa Denko K.K.)
T-X: N,N,N',N'-tetraglycidyl-m-xylenediamine (TETRAD-X, manufactured by Mitsubishi Chemical Corporation)
T-C: 1,3-bis(N,N-diglycidylaminomethyl)cyclohexane (TETRAD-C, manufactured by Mitsubishi Chemical Corporation)
PEI1200: polyethyleneimine (EPOMIN SP-012, manufactured by NIPPON SHOKUBAI CO., LTD., weight average molecular weight: about 1200)
PEI300: polyethyleneimine (EPOMIN SP-003, manufactured by NIPPON SHOKUBAI CO., LTD., weight average molecular weight: about 300)
PEI1800: polyethyleneimine (EPOMIN SP-018, manufactured by NIPPON SHOKUBAI CO., LTD., weight average molecular weight: about 1800)
TETA: triethylenetetramine (manufactured by Tosoh Corporation)
PB-500: poly(1,2-butanediol)-6 propylene glycol (UNIOL (registered trademark) PB-500, manufactured by NOF CORPORATION)
P-400: polypropylene glycol (ADEKA POLYETHER P-400, manufactured by ADEKA Corporation)
PB-700: copolymer of butylene glycol and propylene glycol (UNIOL (registered trademark) PB-700, manufactured by NOF CORPORATION)
DGP-700: polyoxypropylene glyceryl ether (UNILUB (registered trademark) DGP-700, manufactured by NOF CORPORATION)
PEG: polyethylene glycol (manufactured by Sigma-Aldrich Co. LLC., average molecular weight: 200)

The safety index in terms of handling the amine monomers used in the Examples and the Comparative Examples is shown in Table 2 below.

[Table 2]

| | Fire Service Act | Poisonous and Deleterious Substances Control Act | Mutagenicity test (Ames test) | Skin irritation test (rabbit) |
|---|---|---|---|---|
| PEI300 | Hazardous material category IV class III petroleums | Not applicable | Positive | Moderate irritant |
| PEI1200 | Designated combustible | Not applicable | Negative | Mild irritant |
| PEI1800 | Designated combustible | Not applicable | Negative | Mild irritant |
| TETA | Hazardous material category IV class III petroleums | Deleterious substance | Positive | Strong irritant |

[Table 3]

| | Density d of nitrogen element | Specific surface area | Glass transition temperature Tg | NIR ratio $I_A/I_B$ |
|---|---|---|---|---|
| | [mmol/g] | [m²/g] | [°C] | [-] |
| Example 1 | 15.4 | 5.4 | -16 | 1.18 |
| Example 2 | 13.9 | 6.9 | -4 | 1.12 |
| Example 3 | 16.5 | 4.7 | -12 | 1.28 |
| Example 4 | 15.4 | 5.3 | -3 | 1.16 |
| Example 5 | 14.4 | 3.6 | 5 | 1.07 |
| Example 6 | 16.4 | 6.5 | -3 | 1.15 |
| Example 7 | 12.2 | 2.7 | 10 | - |
| Example 8 | 12.4 | 5.3 | 17 | - |
| Example 9 | 12.8 | 6.4 | -1 | - |
| Example 10 | 12.7 | 9.3 | 3 | - |
| Example 11 | 12.7 | 5.9 | 20 | - |
| Comparative Example 1 | 6.6 | 0.3 | 62 | - |
| Comparative Example 2 | 5.1 | 5.5 | 95 | - |
| Comparative Example 3 | 4.4 | 11.6 | 112 | - |

[Table 3] (cont.)

| | $CO_2$ adsorption amount | | | $CO_2$ desorption amount | $CO_2$ desorption rate |
|---|---|---|---|---|---|
| | a2 23°C, 1hr | a3 23°C, 4hr | a1 23°C, 15hr | b1 65°C, 1.5hr | 65°C desorption rate |
| | [mmol/g] | [mmol/g] | [mmol/g] | [mmol/g] | [%] |
| Example 1 | 0.92 | 2.37 | 3.78 | 3.65 | 96 |
| Example 2 | 0.68 | 1.94 | 2.72 | 2.64 | 97 |
| Example 3 | 1.22 | 2.43 | 3.28 | 3.21 | 98 |
| Example 4 | 0.73 | 1.92 | 3.10 | 3.01 | 97 |
| Example 5 | 0.49 | 1.18 | 2.45 | 2.38 | 97 |
| Example 6 | 0.75 | 1.88 | 3.10 | 2.96 | 95 |
| Example 7 | 0.77 | 1.52 | 2.13 | 2.07 | 97 |
| Example 8 | 0.74 | 1.84 | 2.20 | 2.13 | 97 |
| Example 9 | 0.69 | 1.88 | 2.34 | 2.27 | 97 |
| Example 10 | 0.68 | 1.82 | 2.27 | 2.20 | 97 |
| Example 11 | 0.65 | 1.63 | 2.16 | 2.12 | 98 |
| Comparative Example 1 | - | - | 0.03 | - | - |
| Comparative Example 2 | - | - | 0.14 | - | - |
| Comparative Example 3 | - | - | 0.06 | - | - |

As can be seen from Table 3, in the acidic gas adsorbents of the Examples, the density d of nitrogen element was high, and the adsorption amount a1 and the desorption amount b1 were also large values. In particular, in Examples 1 to 6 in which the ratio E/A was adjusted to less than 0.50, the density d of nitrogen element was higher and the adsorption amount a1 was also a larger value compared to Examples 7 to 11. It can be said that the acidic gas adsorbents of the Examples are suitable for adsorption and desorption of acidic gas under a relatively mild condition.

When comparing Examples (Examples 1 and 2 and Examples 3 to 5) in which the same type of monomer was used, the ratio $I_A/I_B$ obtained by NIR tended to increase as the ratio E/A decreased. From this result, it is found that the ratio of the primary amino group in the polymer increases as the ratio E/A decreases.

INDUSTRIAL APPLICABILITY

The acidic gas adsorbent of the present embodiment can adsorb carbon dioxide in atmospheric air.

**Claims**

1. An acidic gas adsorbent comprising a polymer having an amino group, wherein

   a density of nitrogen element in the acidic gas adsorbent is higher than 12.0 mmol/g,
   when the following adsorption test A1 is performed, an adsorption amount a1 of carbon dioxide is 0.35 mmol/g or more, and
   when the following desorption test B1 is performed, a desorption amount b1 of carbon dioxide is 0.2 mmol/g or more,
   adsorption test A1: mixed gas composed of carbon dioxide, nitrogen, and water vapor is continuously fed into a container containing the acidic gas adsorbent for 15 hours, wherein a concentration of the carbon dioxide in the mixed gas is 400 vol ppm, and the mixed gas has a temperature of 23°C and a humidity of 50%RH, and
   desorption test B1: the acidic gas adsorbent after the adsorption test A1 is performed is heated at 65°C for 1.5 hours while the mixed gas is continuously fed into the container.

2. The acidic gas adsorbent according to claim 1, wherein the adsorption amount a1 is 2.4 mmol/g or more.

3. The acidic gas adsorbent according to claim 1, wherein the desorption amount b1 is 2.0 mmol/g or more.

4. The acidic gas adsorbent according to claim 1, wherein

   when the following adsorption test A2 is performed, an adsorption amount a2 of carbon dioxide is 0.8 mmol/g or more,
   adsorption test A2: the mixed gas is continuously fed into the container for 1 hour.

5. The acidic gas adsorbent according to claim 1, wherein

   when the following adsorption test A3 is performed, an adsorption amount a3 of carbon dioxide is 1.9 mmol/g or more,
   adsorption test A3: the mixed gas is continuously fed into the container for 4 hours.

6. An acidic gas adsorbent comprising a polymer having an amino group, wherein

   a density of nitrogen element in the acidic gas adsorbent is higher than 12.0 mmol/g,
   the acidic gas adsorbent has a specific surface area of 0.5 $m^2$/g or more, and
   the polymer has a glass transition temperature of 40°C or less.

7. The acidic gas adsorbent according to claim 1 or 6, wherein the polymer has a glass transition temperature of less than -1°C.

8. The acidic gas adsorbent according to claim 1 or 6, wherein the density of nitrogen element in the acidic gas adsorbent is 13.0 mmol/g or more.

9. The acidic gas adsorbent according to claim 1 or 6, wherein the polymer is an amine polymer including a constitutional unit derived from an epoxy monomer.

10. The acidic gas adsorbent according to claim 9, wherein the amine polymer includes a reaction product of a compound group including an amine monomer and an epoxy monomer.

**11.** The acidic gas adsorbent according to claim 10, wherein the amine monomer includes polyethyleneimine.

**12.** The acidic gas adsorbent according to claim 1 or 6, having a porous structure.

**13.** A structure comprising:

the acidic gas adsorbent according to claim 1 or 6; and
an air flow path.

**14.** An acidic gas adsorption device comprising

an adsorption part having a gas inlet and a gas outlet, wherein
the adsorption part contains the acidic gas adsorbent according to claim 1 or 6.

**15.** A production method for the acidic gas adsorbent according to claim 1 or 6, comprising
causing a compound group including an amine monomer having a primary amino group to react to synthesize the polymer.

**16.** The production method according to claim 15, wherein

the compound group further includes an epoxy monomer having an epoxy group, and
a ratio E/A of an equivalent E of the epoxy group in the compound group relative to an equivalent A of active hydrogen of the primary amino group in the compound group is less than 0.50.

20

36

61

37

63

31

50

64

55

65

60

62

35

22 23

70

40

71

21

42

51

30

41

FIG.1

15

FIG.2A

16

FIG.2B

FIG.2C

100A

85

14

10

86

# FIG.3A

100B

10

90

14

91a

91b

85

93 (93b)    95    92    93 (93a)

# FIG.3B

FIG.4

## INTERNATIONAL SEARCH REPORT

| International application No. |
|---|
| **PCT/JP2024/015198** |

| A. | CLASSIFICATION OF SUBJECT MATTER |
|---|---|

***B01J 20/26***(2006.01)i; ***B01D 53/04***(2006.01)i; ***B01J 20/28***(2006.01)i; ***B01J 20/30***(2006.01)i
FI:    B01J20/26 A; B01J20/28 Z; B01J20/30; B01D53/04

According to International Patent Classification (IPC) or to both national classification and IPC

| B. | FIELDS SEARCHED |
|---|---|

Minimum documentation searched (classification system followed by classification symbols)

B01J20/26; B01D53/04; B01J20/28; B01J20/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021/246383 A1 (NITTO DENKO CORPORATION) 09 December 2021 (2021-12-09) table 1, example 12, paragraphs [0064]-[0066], [0019], [0022], [0023], [0046], [0026]-[0028], [0032], claims | 1-16 |
| P, X | WO 2023/063051 A1 (NITTO DENKO CORPORATION) 20 April 2023 (2023-04-20) | 1-16 |

| ☐ | Further documents are listed in the continuation of Box C. | ☑ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 July 2024** | **23 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| WO | 2021/246383 | A1 | 09 December 2021 | US | 2024/0001336 | A1 | |
| | | | | table 1, example 12, paragraphs [0061]-[0063], [0078]-[0084], [0093], [0136]-[0138], [0164], claims | | | |
| | | | | EP | 4159308 | A1 | |
| | | | | CN | 115702037 | A | |
| WO | 2023/063051 | A1 | 20 April 2023 | WO | 2023/063050 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017009241 A

- US 7767004 B